# EUROPÄISCHE PATENTSCHRIFT

(11) **EP 2 557 056 B1**
(45) Veröffentlichungstag und Bekanntmachung des Hinweises auf die Patenterteilung: **08.06.2016**
(21) Anmeldenummer: 12179986.0
(22) Anmeldetag: 10.08.2012
(51) Int. Cl.: B65G 1/04, B65G 1/06

(54) **Lagersystem mit Hubbalkengerät**
Storage system for lifting bar conveyor
Système de stockage avec appareil à longeron

(30) Priorität: 11.08.2011 AT 11682011
(43) Veröffentlichungstag der Anmeldung: 13.02.2013
(73) Patentinhaber: TGW Logistics Group GmbH, 4600 Wels (AT)
(72) Erfinder: Davolio, Maurizio, 41058 Vignola, Modena (IT)
(74) Vertreter: Burger, Hannes

(56) Entgegenhaltungen:
- EP-A1- 1 772 400
- EP-A1- 2 248 740
- EP-A2- 0 737 631
- EP-A2- 0 976 669
- EP-A2- 1 348 646
- WO-A1-2006/010550
- DE-U1-202004 008 678
- DE-U1-202006 003 068
- FR-A1- 2 364 832

## Beschreibung

Die Erfindung betrifft ein Lagersystem mit einem ersten Regal und gegebenenfalls einem zweiten Regal mit übereinander angeordneten Regalfächern für Fördergüter und mit einem Hubbalkengerät, wie dies im Anspruch 1 beschrieben ist.

Aus der EP 1 354 828 A ist eine Vorrichtung zum Einsortieren, Lagern und Aussortieren von Gütern bekannt geworden, bei der mindestens ein Regal mit Fächern vorgesehen ist, die zueinander in waagrechten Zeilen und senkrechten Spalten angeordnet sind. Ein Tragrahmen ist mittels einer ersten, als Hubeinrichtung ausgebildeten Fördereinrichtung in senkrechter Richtung in einer im Wesentlichen senkrechten Ebene vor den Fächern verfahrbar. Weiters sind am Tragrahmen ebenso viele zweite Fördereinrichtungen vorgesehen, wie Regalspalten an den Fächern vorgesehen sind. Diese zweite Fördereinrichtung ist durch ein Förderband gebildet, mit der das Gut in der waagrechten Richtung verfahrbar ist. Die Förderbänder sind dabei in Reihe angeordnet und bilden eine Förderlinie aus. Weiters ist am Tragrahmen mehr als eine dritte Fördereinrichtung zum Fördern der Güter zwischen der zweiten Fördereinrichtung und einem Regalfach vorgesehen. Der Tragrahmen ist in seinem Querschnitt in Längserstreckung desselben gesehen kastenförmig ausgebildet, wobei im Bereich des Bodens die als Förderbänder ausgebildeten zweiten Fördereinrichtungen angeordnet sind. In einem davon distanzierten oberen Bereich des kastenförmigen Tragrahmens ist die dritte Fördereinrichtung zum Ein- und Auslagern des Fördergutes in das Regalfach bzw. aus dem Regalfach angeordnet. Nachteilig dabei ist der hohe Platzbedarf des Tragrahmens zur Bildung des Hubbalkengeräts.

Eine andere Vorrichtung zur Sequenzbildung von Ladungsträgern mittels eines Zwischenlagers ist aus der EP 1 681 247 B1 bekannt geworden. Dieses Lager umfasst zwei voneinander distanziert angeordnete Regale, zwischen welchen ein Hubbalken in vertikaler Y-Richtung verstellbar angeordnet ist. Jedes der Regale weist mehrere Regalfächer auf, welche als Pufferlager ausgebildet sind. Die Beschickung der einzelnen Regalfächer mit den Fördergütern wird über eine stirnseitige, in Verlängerung zu den Regalen angeordnete Zufördertechnik durchgeführt, wobei zwischen der Zufördertechnik und den Regalen eine zusätzliche Hubeinrichtung angeordnet ist. Damit können die von den beiden Zufördertechniken zugeführten Fördergüter übernommen und anschließend auf die Höhe des jeweiligen Regalfaches in vertikaler Y-Richtung verbracht werden. Von dieser Hubeinrichtung erfolgt eine stirnseitige Übergabe hinein in das jeweilige Regalfach, auf welchem die Fördergüter je nach vorhandenem Freiraum solange weiterbefördert werden, bis dass der vorbestimmte Abstellplatz erreicht ist. Die Entnahme des Fördergutes erfolgt durch eigene Lastaufnahmemittel, welche auf dem Hubbalken in X-Richtung verfahrbar angeordnet sind. Nach der Entnahme des Fördergutes vom Regalfach wird dieses mittels eines am Hubbalken durchgehend angeordneten Transportbandes hin zur Abfördertechnik verlagert. Nachteilig dabei ist, dass dabei jedes der Regallager mit einer eigenen Fördertechnik auszurüsten ist, um stets den Füllungsgrad des Lagers hoch halten zu können. Weiters ist mit dem durchgehend ausgebildeten Transportband keine hohe Flexibilität in der Verlagerung von Fördergütern am Hubbalkengerät erzielbar.

Ein gattungsgemäßes Lagersystem zum Verteilen von Fördergütern in Regalfächer von zu beiden Seiten einer Regalgasse angeordneten Durchlaufregalen ist aus der EP 0 737 631 A2 bekannt. In der Regalgasse ist ein Hubbalkengerät angeordnet, welches ein in vertikaler Y-Richtung über eine Verstellvorrichtung heb- und senkbares Tragelement, eine am Tragelement angeordnete erste Fördervorrichtung mit einer in X-Richtung das Fördergut fördernden ersten Fördereinheit und eine am Tragelement angeordnete zweite Fördervorrichtung mit einer zweiten Fördereinheit, mit welcher das Fördergut in Z-Richtung von der ersten Fördereinheit an das Regalfach verlagerbar ist, umfasst. Die Übernahme von Fördergütern aus den Durchlaufregalen auf die erste Fördereinheit ist nicht vorgesehen.

Der vorliegenden Erfindung liegt die Aufgabe zugrunde, ein Lagersystem mit einem leistungsfähigen Hubbalkengerät zu schaffen, welches einen hoch flexiblen Warenumschlag realisieren kann und sich durch eine kompakte, platzsparende Bauweise auszeichnet.

Diese Aufgabe der Erfindung wird dadurch gelöst, dass das Lagersystem zusätzlich zur Lagerzone zumindest ein zweites Regal aufweist, welches auf einer vom Hubbalkengerät abgewendeten Seite mit Distanz zum ersten Regal angeordnet ist und eine Pufferzone zur Lagerung von Fördergütern bildet, wobei zwischen dem ersten Regal der Lagerzone und dem zweiten Regal der Pufferzone eine (automatisierte) Umlagervorrichtung vorgesehen ist, mittels welcher Fördergüter zwischen der Lagerzone und Pufferzone umlagerbar sind. Das erste Regal und zweite Regal befinden sich auf derselben Seite in Z-Richtung relativ zum Hubbalkengerät. Durch diese bauliche Anordnung kann eine Entkoppelung zwischen dem Ein/Auslagervorgang in der Lagerzone durch das Hubbalkengerät und dem Umlagervorgang in der Pufferzone durch die Umlagervorrichtung erreicht werden. Es kann ein Ein/Auslagervorgang und ein Umlagervorgang parallel laufen, wodurch die Warenumschlagsleistung im Lagersystem erhöht und die Kommissionierzeiten für Aufträge verkürzt werden können. So können auch während einem Ein/Auslagervorgang in der Lagerzone bereits in der Pufferzone aus den Regalen für einen Auftrag, insbesondere Kommissionierauftrag, Förder-güter entnommen und auf zumindest eines der Regalfächer des ersten Regals der Lagerzone umgelagert werden.

Dabei kann durch die Reihenfolge der Entnahme von Fördergütern aus der Pufferzone und/oder Reihenfolge der Umlagerung von Fördergütern auf die Lagerzone auch eine Sortie-rung erfolgen.

Das Hubbalkengerät wird vorwiegend zur Ein/Auslagerung von Fördergütern in ein Regalfach bzw. aus einem Regalfach verwendet, nicht aber zur Umlagerung von Fördergütern zwischen den Regalfächern, um die Fördergüter gemäß einer Reihenfolge und/oder einem Kundenauftrag zusammenzustellen. Demnach können Aufträge besonders rasch abgearbeitet und die Lagereffizienz enorm gesteigert werden.

Gemäß den Ausbildungen in den Ansprüchen 2 und 5 kann eine noch höhere Lagerkapazität und Warenumschlagsleistung im Lagersystem erzielt werden. Sind beidseits zum Hubbalkengerät Pufferzonen vorgesehen bzw. jeweils mit Distanz zu den ersten Regalen der Lagerzone zweite Regale aufgestellt, so können die ersten Regale der Lagerzone jeweils durch zumindest eine (automatisierte) Umlagervorrichtung mit Fördergütern versorgt werden, daher kann eine Umlagerung von Fördergütern von den zweiten Regalen der Pufferzone auf die ersten Regale der Lagerzone von beiden Seiten des Hubbalkengeräts erfolgen.

Dabei erweist sich eine Ausgestaltung nach Anspruch 3 vorteilhaft, weil dadurch voneinander unabhängig Fördergüter in das Lagersystem eingelagert und auch aus diesem wieder ausgelagert werden können.

Nach einer vorteilhaften Weiterbildung gemäß Anspruch 4 wird so die Möglichkeit geschaffen, mit einem derartigen Lagersystem nicht nur eine Zu- als auch Abförderung einzelner Fördergüter aus den Regalen durchführen zu können, sondern darüber hinaus auch noch eigens zusammengestellte Kommissionieraufträge abarbeiten zu können.

Bei der Ausbildung gemäß Anspruch 6 wird so die Möglichkeit geschaffen, mit einem einzigen Typ der Ein- und Auslagerungseinheit Fördergüter bzw. Waren zwischen den Regalen und der Umlagervorrichtung zu verlagern.

Möglich ist dabei auch eine Ausbildung nach Anspruch 7, weil dadurch die Warenzu- und abförderung besser aufeinander abgestimmt und dadurch der Warenfluss im Lagersystem noch effizienter gestaltet werden kann.

Die Ausgestaltung nach Anspruch 8 ermöglicht eine Verkürzung der Velfahrwege des Hubbalkengeräts innerhalb des Lagersystems, wodurch so Verfahrwege minimiert und damit die Effizienz gesteigert werden kann.

Es ist aber auch eine Ausbildung von Vorteil, wie im Anspruch 9 beschrieben, da so unabhängig von der Förderbewegung des Fördergutes im Bereich des Hubbalkengeräts auch eine relative Verlagerung sowie Umsortierung und/oder Umreihung des Fördergutes innerhalb der Regale unabhängig vom Hubbalkengerät erfolgen kann. Dadurch kann eine noch höhere Flexibilität des Lagersystems und damit verbunden ein verbesserter und verkürzter Warenumschlag durchgeführt werden.

Von Vorteil ist auch eine Ausführung gemäß dem Anspruch 10, da durch die Wahl der als Rollen ausgebildeten ersten Förderelemente einerseits für das zu befördernde Fördergut eine ausreichende Unterstützung geschaffen werden kann und andererseits trotzdem so viel Platz geschaffen wird, dass mit einer sehr kompakten Bauweise auch noch die Ein- und Auslagervorrichtung unterhalb der Transportebene am Tragelement angeordnet und gehalten werden kann. Durch diese Anordnung kann ein ungestörter Transport der einzelnen Fördergüter in Längsrichtung des Hubbalkengeräts erfolgen, ohne dass dabei Kollisionen auftreten. Weiters wird dadurch aber auch noch die Möglichkeit geschaffen, unabhängig von der Höhe und somit der Vertikalerstreckung der Fördergüter, diese mit einer einzigen Ausbildung des Hubbalkengeräts innerhalb des Lagersystems zu verlagern. Damit kann eine Vereinfachung in der Fertigung und Lagerhaltung bei den Hubbalkengeräten erzielt werden. Darüber hinaus kann aber auch durch diese kompakte Bauweise der gesamte Platzbedarf des Lagersystems minimiert werden, da mit einer sehr geringen Bauhöhe des Hubbalkengeräts in dieser Ausführungsform das Auslangen gefunden werden kann. Durch das oder die an der Ein- und Auslagervorrichtung angeordneten Mitnahmeelemente kann dann je Bewegungsrichtung der Ein-griff mit dem oder den zu befördernden Fördergütern hergestellt werden. Die hier verwendete Ein- und Auslagervorrichtung dient dabei lediglich zur Durchführung der Ein- und Auslagerbewegung der einzelnen Fördergüter, wobei die Abstützung der Fördergüter entweder auf den ersten Förderelementen des Hubbalkengeräts oder einem der Regalfächer der Regale erfolgt.

Die Ein- und Auslagervorrichtung der zweiten Fördereinheit ist in Z-Richtung, insbesondere beidseitig teleskopierbar, sodass mit geringstem Aufwand eine hohe Flexibilität des Hubbalkengeräts erreicht wird.

Das Mitnahmeelement ist schwenkbar an einem Stellarm der Ein- und Auslagervorrichtung gelagert, sodass eine Eingriffsverbindung zwischen der Ein- und Auslagervorrichtung und dem zu fördernden Fördergut geschaffen werden kann. Dabei wird bei geringstem Platzbedarf diese Eingriffsstellung erreicht.

Es ist auch möglich, dass die Ein- und Auslagervorrichtung in senkrechter Richtung bezüglich der Transportebene in Y-Richtung relativ bezüglich des Tragelements verstellbar ist, wodurch eine zusätzliche Hubbewegung des Fördergutes während der Umsetzbewegung erzielt werden kann. Dadurch können gleichzeitig Ein- und Auslagerbewegungen bei einer gleichbleibenden relativen Positionierung des Tragelementes bezüglich der Regale erfolgen.

Vorteilhaft ist auch eine weitere Ausführungsform nach Anspruch 11, da so jedes zu transportierende Fördergut individuell relativ gegenüber dem Tragelement des Hubbalkengeräts verlagert werden kann.

Vorteilhaft ist weiters eine Ausbildung nach Anspruch 12, da so eine noch höhere Flexibilität bei der Förderung der Fördergüter am Hubbalkengerät erreicht werden kann.

Sind mehrere zweite Fördereinheiten bzw. Ein- und Auslagervorrichtungen auf dem Tragelement angeordnet, deren Stellantriebe unabhängig voneinander ansteuerbar sind, wie im Anspruch 13 beschrieben, so können gleichzeitig vom ersten Regal zumindest ein oder mehrere Fördergüter und vom zweiten Regal zumindest ein oder mehrere Fördergüter in ein Regalfach eingelagert und/oder aus einem Regalfach ausgelagert werden. Andererseits kann auch eine der Anzahl der zweiten Fördereinheiten entsprechende Anzahl von Fördergütern in einer einzigen Bewegung von der ersten Fördervorrichtung in ein Regalfach des ersten Regals oder von der ersten Fördervorrichtung in ein Regalfach des zweiten Regals eingelagert und/oder aus einem Regalfach des ersten Regals auf die erste Fördervorrichtung oder aus einem Regalfach des zweiten Regals auf die ersten Fördervorrichtung ausgelagert werden.

Durch die Ausbildung nach Anspruch 14 ist es möglich, eine hohe Anzahl von Fördergütern gleichzeitig und unabhängig voneinander in das Regal einzulagern bzw. davon wiederum auszulagern.

Vorteilhaft ist auch eine Weiterbildung nach Anspruch 15, da so eine gerichtete und gesteuerte, gleichmäßige Ein- und Auslagerbewegung der einzelnen Fördergüter erreicht werden kann, ohne dass diese bei dieser Verlagerungsbewegung verdreht werden.

Durch die Weiterbildung nach Anspruch 16 wird erreicht, dass so mit einer sehr geringen Bauhöhe das Auslangen gefunden werden kann und trotzdem eine Beförderung des Fördergutes in Längsrichtung des Hubbalkengeräts durchgeführt werden kann.

Es ist auch von Vorteil, wenn die Umlagervorrichtung mit zumindest einer in Z-Richtung beidseitig teleskopierbaren Ein- und Auslagerungseinheit versehen ist.

Die Anzahl der ersten Fördereinheiten mit deren ersten Förderelementen ist derart gewählt, dass diese Anzahl der Anzahl der Abstellplätze in einem Regalfach in X-Richtung entspricht und die ersten Fördereinheiten verteilt über die Länge des Tragelements angeordnet sind. Bevorzugt steht jedes der als angetriebene Rolle ausgebildete, erste Förderelement mit einem eigenen Antrieb in Wirkverbindung. Zwischen den mit gegenseitigem Abstand voneinander angeordneten Rollen (erstes Förderelement), ist ein Aufnahmeraum ausgebildet, innerhalb welchem die Ein- und Auslagervorrichtung angeordnet werden kann. Damit können die oben beschriebenen Vorteile erzielt werden.

Die zweite Fördervorrichtung umfasst eine Mehrzahl von am Tragelement angeordnete und unabhängig voneinander ansteuerbare zweite Fördereinheiten, wobei jede zweite Fördereinheit zumindest eine Ein- und Auslagervorrichtung ausbildet. Die Anzahl der zweiten Fördereinheiten ist derart gewählt, dass diese der Anzahl der Abstellplätze in einem Regalfach in X-Richtung entspricht. Jedem Abstellplatz des Fördergutes im Regalfach können in X-Richtung gesehen zumindest zwei Ein- und Auslagervorrichtungen am Tragelement zugeordnet werden. Damit können die oben beschriebenen Vorteile erzielt werden.

Zum besseren Verständnis der Erfindung wird diese anhand der nachfolgenden Figuren näher erläutert.

Es zeigen jeweils in stark schematisch vereinfachter Darstellung:
- Fig. 1: einen Teilabschnitt eines Lagersystems mit einem Hubbalkengerät, in Ansicht geschnitten, gemäß den Linien I-I in Fig. 2
- Fig. 2: das Lagersystem nach Fig. 1 in Draufsicht;
- Fig. 3: eine erste mögliche Ausbildung eines Lagersystems, in Ansicht, teilweise geschnitten und stark schematisch vereinfachter Darstellung;
- Fig. 4: das Lagersystem nach Fig. 3, in Draufsicht;
- Fig. 5: eine weitere mögliche Ausbildung eines Lagersystems, in Ansicht, teilweise geschnitten und stark schematisch vereinfachter Darstellung;
- Fig. 6: das Lagersystem nach Fig. 5, in Draufsicht;
- Fig. 7: eine andere mögliche Ausbildung eines Lagersystems, in Ansicht, teilweise geschnitten und stark schematisch vereinfachter Darstellung;
- Fig. 8: das Lagersystem nach Fig. 7, in Draufsicht, teilweise geschnitten;
- Fig. 9: eine weitere mögliche Ausbildung eines Lagersystems, in Ansicht, teilweise geschnitten und stark schematisch vereinfachter Darstellung;
- Fig. 10: das Lagersystem nach Fig. 9, in Draufsicht;

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

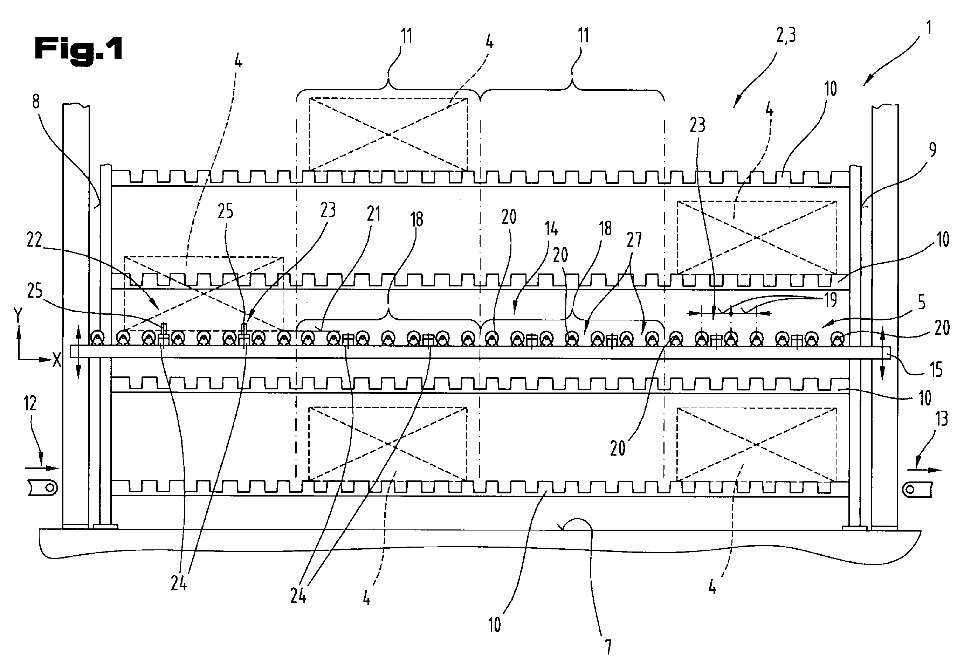

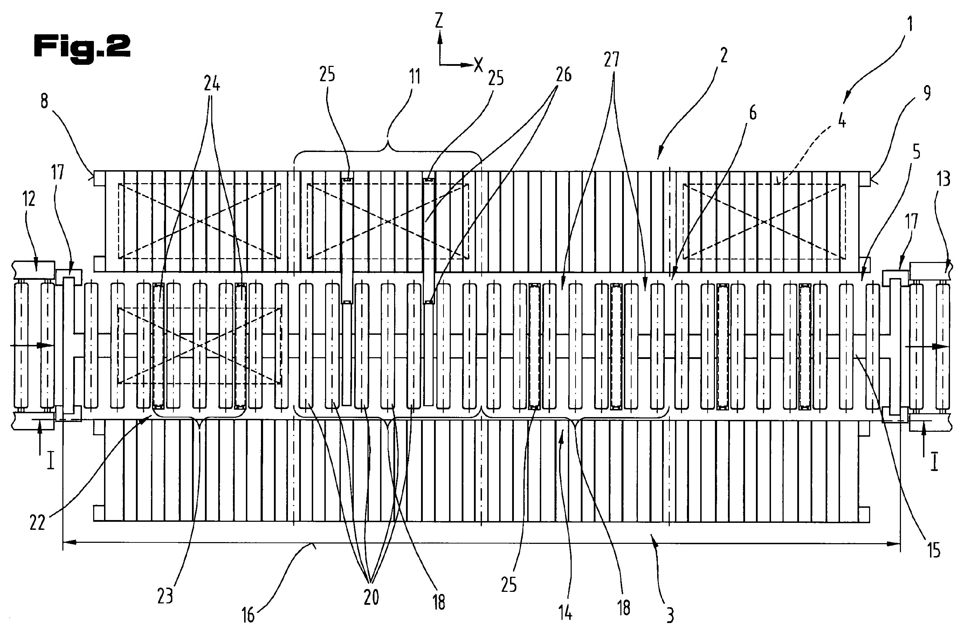

In den Fig. 1 und 2 ist ein Teilabschnitt eines Lagersystems 1 gezeigt, welches zumindest ein Regal 2, 3 zum Lagern bzw. Bevorraten von Fördergütern 4 sowie zumindest ein Hubbalkengerät 5 umfasst.

Bei diesem hier gezeigten Ausführungsbeispiel sind zwei Regale 2, 3 vorgesehen, zwischen denen sich eine Regalgasse 6 erstreckt, in welcher das Hubbalkengerät 5 für den Umschlag der Fördergüter 4 stationär angeordnet ist. Die Regale 2, 3 sind auf einer vereinfacht dargestellten Aufstandsfläche 7 aufgestellt, wobei die Aufstandsfläche 7 beispielsweise ein Hallenboden oder dergleichen ist. Die Regale 2, 3 weisen in Richtung der Regalgasse 6 gesehen, voneinander distanziert angeordnete Stirnseiten 8, 9 auf, welche somit die Regale 2, 3 in deren Längsrichtung begrenzen. Weiters umfassen die einzelnen Regale 2, 3 mehrere übereinander angeordnete Regalfächer 10, auf welchem die Fördergüter 4, je nach deren Größe und Abmessung, ausgehend vom Hubbalkengerät 5 dort eingelagert und von diesem auch wieder entnommen werden.

Ein bei derartigen Lagersystemen 1 verwendetes Koordinatensystem bzw. die entsprechende Richtungsangabe wird wie folgt festgelegt. Als "X"-Richtung wird jene Richtung bezeichnet, welche sich in paralleler Richtung bezüglich der Aufstandsfläche 7 sowie in Längsrichtung der Regalgasse 6 erstreckt. In der gleichen Ebene, jedoch in einer dazu senkrechten Richtung bezüglich der "X"-Richtung, wird diese Richtung als so genannte "Z"-Richtung bezeichnet. Mit dieser Richtungsangabe wird somit die Ein- und Auslagerrichtung der Fördergüter 4 vom Hubbalkengerät 5 hinein ins Regalfach 10 und aus diesem wieder heraus bezeichnet. Diese beiden Koordinaten sind in der Fig. 2 dargestellt. Die in senkrechter Richtung bezüglich der Aufstandsfläche 7 bezeichnete Bewegungsrichtung - also die Vertikalbewegung - wird als "Y"-Richtung bezeichnet. In der Fig. 1 ist die "Y"-Koordinate mit einem Pfeil angedeutet.

In Abhängigkeit von der Größe bzw. den Abmessungen der Fördergüter 4 sind an jedem der Regalfächer 10 Abstellplätze 11 in X-Richtung nebeneinander angeordnet. Bei dem hier gezeigten Ausführungsbeispiel sind je Regalfach vier nebeneinander angeordnete Abstellplätze 11 vorgesehen, wobei deren Größe vom Fördergut 4 abhängig ist. Dabei sei bemerkt, dass auch je Regalfach 10 nur ein Abstellplatz oder aber auch mehrere derselben vorgesehen sein können und dies frei gewählt werden kann. Bevorzugt wird jedes Regalfach 10 über seine Längserstreckung zwischen den Stirnseiten 8, 9 durchlaufend und ohne Unterbrechung ausgebildet, wodurch eine hohe Stelldichte erzielbar ist. Je nach Platzaufwand und Ausbildung des Hubbalkengeräts 5 ist es aber auch möglich, dem oder den Regalfächern 10 eine zusätzliche, hier jedoch nicht näher dargestellte Stütze bzw. einen Steher zuzuordnen, um die Tragfähigkeit bei höheren Lasten erhöhen zu können. Gleichfalls sei angemerkt, dass in Z-Richtung je Regalfach 10 aber auch mehrere Abstellplätze 4 hintereinander angeordnet sein können. Dabei spricht man dann von einem doppeltiefen oder mehrfachtiefen Lagerregal.

An beiden Stirnseiten 8, 9 der Regale 2, 3 ist jeweils im Anschluss an das Hubbalkengerät 5 vereinfacht, eine Zufördertechnik 12 sowie eine Abfördertechnik 13 dargestellt. Diese kann jedem der Regalfächer 10 zugeordnet sein, wobei auch eine Mehrfachanordnung von Zufördertechniken 12 und/oder Abfördertechniken 13 möglich ist. Diese Zu- und Abfördertechniken 12, 13 können durch Bandförderer, Rollenförderer oder ähnliches gebildet sein.

So ist es möglich, ein Fördergut 4 oder aber auch mehrere Fördergüter 4, beispielsweise über die Zufördertechnik 12 dem Hubbalkengerät 5 zu übergeben und dort mittels einer ersten Fördervorrichtung 14 das oder die Fördergüter 4 in X-Richtung relativ bezüglich des Hubbalkengeräts 5 zu verlagern.

So umfasst das Hubbalkengerät 5 weiters noch ein Tragelement 15, das sich in etwa über die Längserstreckung des Regals 2, 3 zwischen seinen beiden Stirnseiten 8, 9 erstreckt und dabei eine Länge 16 definiert. In etwa wird dabei so verstanden, dass das Tragelement 15 zur Bildung des Hubbalkengeräts 5 die gleiche Längserstreckung aufweist, welche das Regal 2, 3 zwischen seinen Stirnseiten 8, 9 in X-Richtung aufweist. Dabei sind aber auch Abweichungen davon in gewissen Grenzen möglich, bei der das Tragelement 15 kürzer oder länger ist als der Abstand des Regals 2, 3 zwischen seinen Stirnseiten 8, 9.

Weiters umfasst das Hubbalkengerät 5 noch eine vereinfacht dargestellte Verstellvorrichtung 17, welche bevorzugt mit dem Tragelement 15 zusammenwirkt, um dieses in vertikaler YRichtung, zwischen den einzelnen Regalfächern 10, verfahren bzw. verstellen zu können.

Das Hubbalkengerät 5 mit seinem Tragelement 15 ist somit ortsfest innerhalb der Regalgasse 6 angeordnet und kann mittels der Verstellvorrichtung 17 ausschließlich in Y-Richtung verstellt werden, um wahlweise die einzelnen Regalfächer 10 ansteuern zu können. Die Beschickung bzw. Übergabe von Fördergütern 4 erfolgt ausgehend von der Zufördertechnik 12 hin zur ersten, am Tragelement 5 angeordneten Fördervorrichtung 14, welche nachfolgend noch detaillierter beschriebenen wird. Von dieser wird das bzw. werden die Fördergüter 4 am Hubbalkengerät 5 solange relativ in X-Richtung bezüglich des Tragelements 15 verlagert, bis dass jene Übergabeposition erreicht ist, in welcher das bzw. in welcher die Fördergüter 4 auf den bzw. die dafür vorgesehenen Abstellplätze 11 eingelagert bzw. abgestellt werden sollen. Dazu kann gleichzeitig die Verstellung des gesamten Hubbalkengeräts 5 in Y-Richtung erfolgen, um das dafür vorgesehene Regalfach 10 mit dem entsprechenden Abstellplatz 11 anfahren zu können.

Das Lagersystem 1 kann zumindest ein Regal 2, 3 umfassen, wobei jedoch bevorzugt beidseitig des Hubbalkengeräts 5 ein Regal 2, 3 vorgesehen ist. Zumeist wird dieses als Fachbodenregal ausgebildet, um so mit einem Minimum an Regalstehern das Auslangen zu finden. Dadurch wird eine hohe Stelldichte erzielt.

Jedes der Regalfächer 10 kann in X-Richtung eine Mehrzahl von nebeneinander angeordneten Abstellplätzen 11 aufweisen, wobei sich bei einer gleichen Größe von Fördergütern 4 eine spaltenweise Anordnung übereinander ergibt, wie dies in der Fig. 1 mit strichpunktierten Linien angedeutet ist. Dabei ist es aber auch möglich, im Regal 2, 3 unterschiedliche Größen des Fördergutes 4 an den dafür vorgesehenen Abstellplätzen 11 einzulagern.

Bei diesem hier gezeigten Ausführungsbeispiel umfasst jeder Fachboden bzw. jedes Regalfach 10 in X-Richtung vier nebeneinander angeordnete Abstellplätze 11. Weiters wird die erste Fördervorrichtung 14 zur Förderung des Fördergutes 4 in X-Richtung mit einer der Anzahl der Abstellplätze 11 in X-Richtung entsprechenden Anzahl an ersten Fördereinheiten 18 ausgebildet. Somit sind über die Länge 16 des Tragelements 15 bzw. des Hubbalkengeräts 5 bei dieser Ausführungsform vier derartig erste Fördereinheiten 18 vorgesehen. Jeder der Fördereinheiten 18 umfasst jeweils mehrere in Längserstreckung des Tragelements 15 mit gegenseitigem Abstand 19 parallel angeordnete, bevorzugt als angetriebene Rollen ausgebildete, erste Förderelemente 20. Dabei sind die Rollen derart angeordnet, dass diese an deren Oberseite eine Transportebene 21 für die Fördergüter 4 definieren. Der Abstand 19 zwischen den als Rollen ausgebildeten ersten Förderelementen 20 wird oder kann in Abhängigkeit von den Abmessungen der Fördergüter 4 gewählt werden, wobei bevorzugt jede der Rollen angetrieben ist. Dies kann derart geschehen, dass alle ersten Förderelemente 20 einer ersten Fördereinheit 18 mit einem gemeinsamen Stellantrieb in Wirkverbindung stehen. Bevorzugt steht jedoch jedes, der als angetriebene Rolle ausgebildeten ersten Förderelemente 20 der ersten Fördereinheit 18 mit einem eigenen Stellantrieb in Wirkverbindung. Dies könnte beispielsweise über ein als "Motorrolle" bezeichnetes Förderelement 20 erfolgen. Dieser Stellantrieb (elektrischer Antriebsmotor - wie ein elektronisch kommutierter, bürstenloser dreiphasiger Gleichstrommotor) kann dann im Inneren eines Rollenkörpers für das Förderelement 20 angeordnet sein, und mit nicht näher dargestellten Zuleitungen für die Energieversorgung, beispielsweise mit einem Stromnetz in Verbindung stehen. Dabei ist es zusätzlich noch möglich, dass jedes der einzelnen ersten Förderelemente 20 eigens und somit getrennt von den anderen ersten Förderelementen 20 ansteuerbar ist, wodurch eine sehr hohe Flexibilität für die Beförderung des Fördergutes 4 am Hubbalkengerät 5 zu erzielen ist.

Ist die Förderrichtung durch das Förderelement 20, insbesondere eine Drehrichtung der Rolle reversierbar, so können die Fördergüter 4 auf der ersten Fördervorrichtung 14 in X-Richtung zwischen den Stirnseiten 8, 9 bewegt werden. Hierzu sind die Förderelemente 20 mit einem reversierbaren Stellantrieb gekoppelt oder mit einem reversierbaren Stellantrieb ausgestattet. Dabei können sämtliche erste Fördereinheiten 18 entweder mit gleicher Förderrichtung betrieben werden, oder aber einzelne der Fördereinheiten 18 mit entgegengesetzter Förderrichtung betrieben werden. Werden die Förderelemente 20 der Fördereinheiten 18 mit gleicher Förderrichtung betrieben, können entlang der ersten Fördervorrichtung 14 die Fördergüter 4 zu einem Pulk aufgestaut werden. Werden die Förderelemente 20 der Fördereinheiten 18 mit entgegengesetzten Förderrichtungen betrieben, können entlang der ersten Fördervorrichtung 14 entweder zwischen Fördergüter 4 oder zwischen einem Fördergut 4 und Endabschnitt der ersten Fördervorrichtung 14 zumindest eine Lücke gebildet werden. Letzteres ermöglicht, dass ein Fördergut 4 aus einem der Regale 2, 3 ausgelagert und auf die erste Fördervorrichtung 14 in die gebildete Lücke bewegt wird. Die Lücke ist in ihrem Lückenabstand zur Aufnahme eines oder mehrerer Fördergüter 4 variabel. Der Lückenabstand entspricht etwa der Länge einer ersten Fördereinheiten 18. Die Lücke wird auf der ersten Fördervorrichtung 14 an jener ersten Fördereinheit 18 oder an jenen ersten Fördereinheiten 18 gebildet. Dadurch kann auf dem Hubbalkengerät 5 alleinig durch Steuerung der jeweiligen Stellantriebe der ersten Fördereinheiten 18 und/oder Steuerung der jeweiligen Stellantriebe der zweiten Fördereinheiten 23, insbesondere der Mitnahmeelemente 25 für die Ein- und Auslagervorrichtung 24en, wie nachfolgend beschrieben, ein oder mehrere Kundenaufträge und/oder Fördergüter gemäß einer Reihenfolge zusammengestellt werden.

Auch können Förderelemente 20 einiger Fördereinheiten 18 mit gleicher Förderrichtung und Förderelemente 20 anderer Fördereinheiten 18 mit entgegengesetzten Förderrichtungen betrieben werden. Dadurch ist eine Doppelfunktion, nämlich die der "Pulkbildung" und "Lückenbildung" gegeben.

Die Positionierbewegung der Fördergüter 4 auf der ersten Fördervorrichtung 14 zur "Pulkbildung" und/oder "Lückenbildung" kann während der Verstellbewegung in Y-Richtung erfolgen.

Ist das am Hubbalkengerät 5 mittels der ersten Fördereinheiten 18 in X-Richtung verlagerte Fördergut 4 in seiner Ausrichtung entsprechend dem dafür vorgesehenen Abstellplatz 11 verbracht worden sowie das Hubbalkengerät 5 in Y-Richtung mittels der Verstellvorrichtung 17 hin zum entsprechenden Regalfach 10 verstellt worden, erfolgt die Einlagerungsbewegung des Fördergutes 4 hin auf den Abstellplatz 11. Dies wird durch eine zweite Fördervorrichtung 22 durchgeführt, welche die Verlagerungsbewegung in Z-Richtung durchführt. So umfasst die zweite Fördervorrichtung 22 zumindest eine zweite Fördereinheit 23. Dabei wird wieder bevorzugt die Anzahl der zweiten Fördereinheiten 23 in Abhängigkeit von dem oder den am Regalfach 10 vorgesehenen Abstellplätzen 11 gewählt. Bei dem hier vorliegenden Ausführungsbeispiel sind zwischen den beiden Stirnseiten 8, 9 in X-Richtung vier Abstellplätze 11 vorgesehen, wobei dann die entsprechende Anzahl an zweiten Fördereinheiten 23 ebenfalls mit vier gewählt ist. Bei einer davon abweichenden Anzahl an Abstellplätzen 11 ist sowohl die Anzahl der ersten Fördereinheiten 18 und/oder der zweiten Fördereinheiten 23 entsprechend daran anzupassen. Dabei sind sowohl die erste als auch die zweite Fördervorrichtung 14, 22 am Tragelement 15 angeordnet bzw. gehaltert, um so die Verstellbewegungen der Fördergüter 4 in X-Richtung und Z-Richtung durchführen zu können. Weiters erfolgt auch eine über die Länge 16 des Tragelements 15 bevorzugt gleichmäßige Aufteilung bzw. Anordnung der ersten Fördereinheiten 18 und/oder der zweiten Fördereinheiten 23.

Die zweite Fördereinheit 23 umfasst zumindest eine Ein- und Auslagervorrichtung 24 mit zumindest einem, bevorzugt zwei oder mehreren Mitnahmeelementen 25, welche über einen Stellantrieb, beispielweise elektrisch und/oder fluidisch betätigbaren Stellantrieb, wahlweise je nach Transportrichtung in der Z-Richtung mit dem Fördergut 4 in Eingriff gebracht werden können. So kann ein Stellantrieb entweder die Ein- und Auslagervorrichtung 24 mit den zwei/mehreren Mitnahmeelementen 25 oder die Ein- und Auslagervorrichtung 24 mit einem Mitnahmeelement 25 verstellen. Dabei ist das bzw. sind die Mitnahmeelemente 25 über den/die Stellantrieb(e) wahlweise von einer sich unterhalb der Transportebene 21 befindlichen Ruhestellung in eine sich oberhalb der Transportebene 21 befindliche Eingriffsstellung verstellbar. Somit lastet in der Ruhestellung das zumindest eine Fördergut 4 auf der ersten Fördereinheit 18, insbesondere an den Förderelementen 20 auf. In der Eingriffsstellung lastet das zumindest eine Fördergut 4 auf der zweiten Fördereinheit 18, insbesondere zumindest einer Ein- und Auslagervorrichtung 24 auf und kann mittels letzter zwischen dem Regal 2, 3 und der ersten Fördereinheit 18 manipuliert werden. Die Ein- und Auslagervorrichtung 24 kann dabei in Form von Teleskoparmen bzw. Schubarmen ausgebildet sein, welche in bekannter Art und Weise das Fördergut 4 in Z-Richtung zwischen der ersten Fördereinheit 18 und dem Abstellplatz 11 am Regalfach 10 verlagern und bei Bedarf wieder entnehmen bzw. auslagern können.

Jede der Ein- und Auslagerungsvorrichtungen 24 der zweiten Fördereinheit 23 ist in Z-Richtung teleskopierbar, wobei bei einer beidseitigen Anordnung der Regale 2,3 bezüglich des Hubbalkengeräts 5 die Ein- und Auslagervorrichtung 24 beidseitig teleskopierbar ausgebildet ist.

Wie bereits zuvor beschrieben, wird mittels der Verstellvorrichtung 17 das Tragelement 15 mit den daran angeordneten ersten und zweiten Fördervorrichtungen 14, 22 derart bezüglich der Abstellebene im jeweiligen Regalfach 10 angeordnet, dass bei einer Einlagerungsbewegung des Fördergutes 4 hin auf den Abstellplatz 11 die durch die erste Fördervorrichtung 14 bzw. die ersten Fördereinheiten 18 gebildete Transportebene 21 in Y-Richtung geringfügig oberhalb der Abstellebene des jeweiligen Abstellplatzes 11 angeordnet ist. Damit kann ein Verklemmen bzw. ein Verhaken des Fördergutes 4 am Beginn der Einlagerungsbewegung hin auf das Regalfach 10 verhindert werden. In umgekehrter Richtung beim Auslagervorgang des Fördergutes 4 hin auf das Hubbalkengerät 5 wird die Transportebene 21 am Hubbalkengerät 5 geringfügig tiefer angeordnet als die Abstellfläche des Regalfaches 10. Damit kann auch hier eine einwandfreie Übernahmebewegung des Fördergutes 4 ausgehend vom Abstellplatz 11 hin auf die ersten Förderelemente 20 durchgeführt werden. Diese zueinander versetzte Anordnung während der Ein- oder der Auslagerbewegung ist vom zu befördernden Fördergut 4 abhängig und kann beispielsweise 5 mm oder mehr bis hin zu 10 mm in jede Richtung betragen.

Um eine ordnungsgemäße Ein- und Auslagerbewegung des Fördergutes 4 zu erzielen, werden bevorzugt jedem Abstellplatz 11 des Fördergutes 4 im Regalfach 10 in X-Richtung gesehen bevorzugt zumindest zwei oder mehr derartige Ein- und Auslagervorrichtungen 24 am Tragelement 15 vorgesehen, bzw. umfasst die erste Fördereinheit 23 die Ein- und Auslagervorrichtungen 24.

Um das Mitnahmeelement 25 zwischen seiner Ruhestellung und seiner Eingriffsstellung verlagern zu können, kann dieses über einen Stellantrieb z.B. schwenkbar an einem Stellarm 26 der Ein- und Auslagervorrichtung 24 gelagert sein. Unabhängig davon wäre es aber auch noch möglich, dass die Ein- und Auslagervorrichtung 24 in senkrechter Richtung bezüglich der Transportebene 21 in Y-Richtung relativ bezüglich des Tragelements 15 verstellbar an diesen gehaltert ist. Damit könnte das Fördergut 4 sobald es sich am Hubbalkengerät 5 in der entsprechenden Übergabeposition befindet relativ bezüglich der Transportebene 21 an den ersten Förderelementen 20 angehoben werden und in dieser angehobenen Position in das Regalfach 10 verbracht werden.

Die einzelnen ersten Förderelemente 20 der ersten Fördereinheit 18 sind in X-Richtung gesehen voneinander mit gegenseitigem Abstand 19 angeordnet, wodurch sich zwischen diesen ein Aufnahmeraum 27 ausbildet. In diesem Aufnahmeraum 27 ist die bzw. sind die Ein- und Auslagervorrichtungen 24 aufgenommen und somit zwischen den als Rollen ausgebildeten ersten Förderelementen 20 angeordnet. Damit wird eine kompakte Bauweise des gesamten Hubbalkengeräts 5 in Y-Richtung gesehen erreicht. Dabei sind bevorzugt die Stellarme 26 der Ein- und Auslagervorrichtungen 24 mit ihrer Oberseite unterhalb der Transportebene 21 angeordnet, um bei einer Förderung des Fördergutes 4 in X-Richtung Kollisionen zu vermeiden.

Durch diese Anordnung des oder der Ein- und Auslagervorrichtungen 24 ist es auch im Bereich des Regalfaches 10 notwendig, einen entsprechenden Freiraum für das Hineinbewegen des Stellarmes 26 in den Querschnitt des Regalfaches zu ermöglichen. Dazu kann das Regalfach für die Bildung des Abstellplatzes 11 einen in Z-Richtung erhöhten Überstand aufweisen, welcher durch Rippen, Stege, wellenförmige Erhöhungen und/oder Vertiefungen gebildet sein kann. Es ist nur in der Übergabeposition auf eine gegenseitige Ausrichtung des Freiraumes im Bereich des Regalfaches 10 mit den am Hubbalkengerät 5 angeordneten Ein- und Auslagervorrichtungen 24 zu achten.

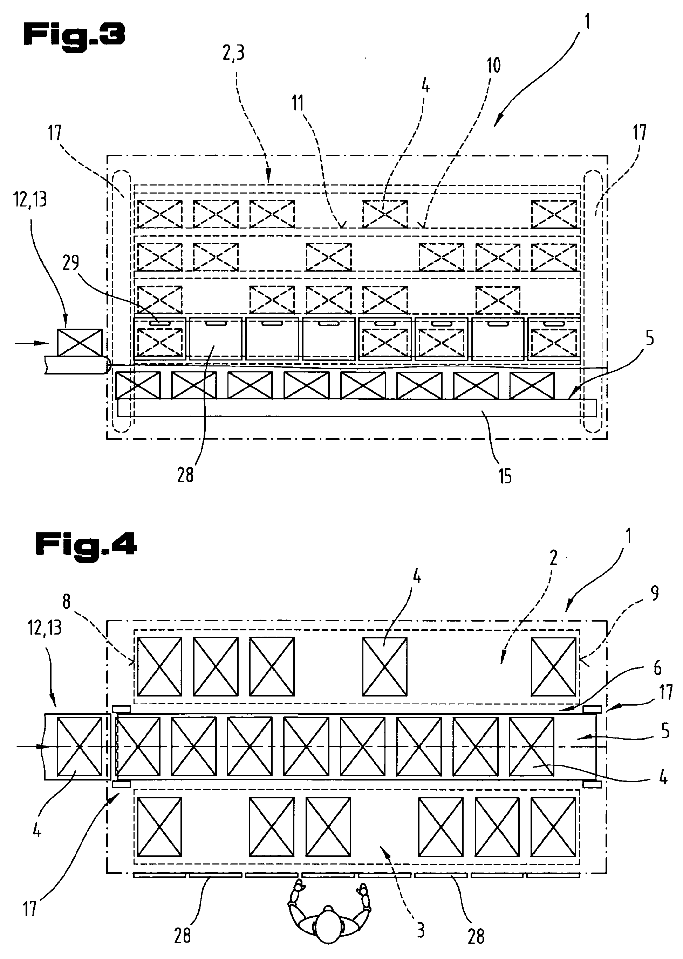

In den Fig. 3 und 4 ist eine mögliche und gegebenenfalls für sich eigenständige Ausbildung eines Lagersystems 1 mit Regalen 2, 3, einem Hubbalkengerät 5 sowie einer Zu- und Abfördertechnik 12, 13 gezeigt, wobei wiederum für gleiche Teile gleiche Bezugszeichen bzw. Bauteilbezeichnungen wie in den voran gegangenen Fig. 1 und 2 verwendet werden. Um unnötige Wiederholungen zu vermeiden wird auf die detaillierte Beschreibung in den vorangegangenen Fig. 1 und 2 hingewiesen bzw. Bezug genommen.

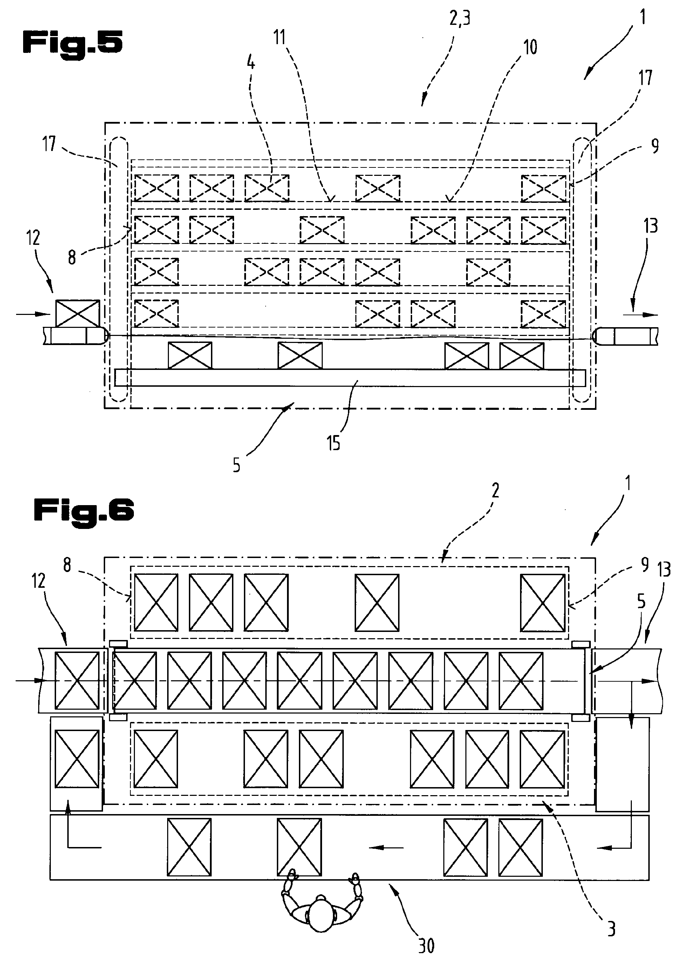

Dabei sei einleitend erwähnt, dass hier nur eine sehr stark schematisch vereinfachte Darstellung der das Lagersystem 1 bildenden Bauteile erfolgt, um die Übersichtlichkeit in der Darstellung beibehalten zu können. Es wurden hier nicht nur die Regale 2, 3 sondern auch das Hubbalkengerät 5 stark vereinfacht dargestellt. Beim Hubbalkengerät 5 wurde auf die Darstellung der beiden Fördervorrichtungen 14, 22 vollständig verzichtet. Gleichfalls wurde das gesamte Hubbalkengerät 5 in Form eines Rahmens vereinfacht mit den darauf angeordneten Fördergütern 4 gezeigt. Diese schematisch vereinfachte Darstellungsweise wird auch in den nachfolgenden Fig. 5 bis 10 beibehalten.

Bei diesem hier dargestellten Lagersystem 1 ist jeweils beidseits des Hubbalkengeräts 5 in Z-Richtung ein Regal 2, 3 mit übereinander angeordneten Regalfächern 10 vorgesehen. In der Regalgasse 6 ist das Hubbalkengerät 5 angeordnet. Im rechten Teil der beiden Fig. 3 und 4 ist noch vereinfacht ein Teil einer Zuführtechnik 12 gezeigt, mit welcher das Fördergut 4 hin auf das Hubbalkengerät 5 gefördert bzw. übergeben werden kann.

Im Gegensatz zu der zuvor gezeigten Ausführung der Regale 2, 3 sind hier im Bereich jeden Regalfaches 10 in X-Richtung acht Abstellplätze 11 vorgesehen. Eine entsprechende Anzahl von ersten Fördervorrichtungen 14 sowie zweiten Fördervorrichtungen 22 ist am Hubbalkengerät 5 vorzusehen, um eine individuelle Beschickung der einzelnen Abstellplätze 11 mit den Fördergütern 4 sicherstellen zu können.

Bei diesem hier gezeigten Ausführungsbeispiel ist vorgesehen, dass beispielsweise im Bereich einer Längsseite des Regals 3 eine Zugriffmöglichkeit hin zu dem bzw. den im dahinterliegenden Regalfach 10 abgestellten bzw. bereitgestellten Fördergütern 4 besteht. Diese Zugriffsmöglichkeit könnte beispielsweise über jeweils eigene Türen, Klappen, Laden oder andere Elemente erfolgen. Es wird allgemein von einem Entnahmefach 28 gesprochen.

Die Bereitstellung könnte für sensible Waren dienen, wie dies beispielsweise in der Medizintechnik oder bei Arzneimitteln der Fall ist. Unabhängig davon wäre es aber auch noch möglich, nicht nur im Bereich eines der Regale 2, 3 diese Entnahme- bzw. Zugriffsmöglichkeit zu schaffen, sondern diese an beiden Regalen 2, 3 mehrere Entnahmefächer 28 vorzusehen. Gleichfalls wäre aber auch eine in Y-Richtung gesehene Mehrfachanordnung derselben an mehreren Regalfächern 10 denkbar. Darüber hinaus wäre es auch noch möglich, jedem der Entnahmefächer 28 eine eigene Kontrollvorrichtung 29 zuzuordnen, über welche es erst möglich ist, einen Zutritt hin zum Entnahmefach 28 freigeben zu können. Dies könnte beispielsweise eine Lesevorrichtung bzw. Erfassungsvorrichtung sein, mit welcher die Identität bzw. Berechtigung der Entnahmeperson zum jeweiligen Entnahmefach 28 geprüft wird, und erst anschließend die Freigabe erfolgt. Dies kann über nicht näher dargestellte Steuerungen und Regelungen erfolgen, wie dies hinlänglich aus dem Stand der Technik bekannt ist.

Bei diesem hier gezeigten Ausführungsbeispiel könnte die hier links dargestellte Zufördertechnik 12 auch gleichzeitig die Abfördertechnik 13 darstellen. Unabhängig davon wäre es aber auch möglich, die Zufördertechnik 12 der ersten Stirnseite 8 und die Abfördertechnik 13 der weiteren Stirnseite 9 des Regals 2, 3 zuzuordnen. Die Anordnung der Entnahmefächer 28 kann davon unabhängig gewählt werden.

In den Fig. 5 und 6 ist eine weitere und gegebenenfalls für sich eigenständige Ausführungsform eines Lagersystems 1 gezeigt, wobei wiederum für gleiche Teile gleiche Bezugszeichen bzw. Bauteilbezeichnungen in den voran gegangenen Fig. 1 bis 4 verwendet werden. Um unnötige Wiederholungen zu vermeiden, wird auf die detaillierte Beschreibung in den vorangegangenen Fig. 1 bis 4 hingewiesen bzw. Bezug genommen.

Das hier gezeigte Lagersystem 1 umfasst wiederum beidseits des Hubbalkengeräts 5 in Z-Richtung angeordnete Regale 2, 3 mit mehreren übereinander angeordneten Regalfächern 10 zur Ausbildung der Abstellplätze 11 für die Fördergüter 4. Im Bereich der ersten Stirnseite 8 - im vorliegenden Fall im linken Bereich des Lagersystems 1 - ist vereinfacht die Zufördertechnik 12 und im Bereich der weiteren Stirnseite 9 die Abfördertechnik 13 gezeigt. Zusätzlich umfasst dieses Lagersystem 1 noch eine Kommissionierfördertechnik 30 mittels welcher es möglich ist, einen zusätzlichen Förderkreislauf für das Fördergut 4 zwischen der Abfördertechnik 13 und der Zufördertechnik 12 zu ermöglichen, wie dies vereinfacht mit Pfeilen dargestellt ist. So kann beispielsweise Fördergut 4 vom Hubbalkengerät 5 auf den Beginn der Abfördertechnik 13 abgegeben werden von dort mittels der Kommissionierfördertechnik 30 einem Kommissionierplatz bzw. einer Kommissionierperson zugefördert werden. Diese kann dann entsprechende Artikel bzw. Waren aus den bereit gestellten Transportbehältern entnehmen und in nicht näher dargestellte Kommissionierbehälter übergeben. Dies kann beispielsweise entsprechend einem Kommissionierauftrag erfolgen.

So kann eine entsprechende Bevorratung von Fördergut 4 in den einzelnen Regalen 2, 3 erfolgen. Für einen entsprechenden Kommissionierauftrag können dann in einem der Regalfächer 10 für diesen speziellen Kommissionierauftrag dienende Fördergüter 4 in den Aufnahmebehältern bereitgestellt und je nach Anzahl der Fördergüter diese auf einmal aus den jeweiligen Abstellplätzen 11 hin auf das Hubbalkengerät 5 übernommen werden. Anschließend werden die so in einer Reihe vorbereiteten Fördergüter mittels der ersten Fördervorrichtung 14 bzw. den ersten Fördereinheiten 18 hin zur Abfördertechnik 13 und weiter von dieser zur Kommissionierfördertechnik 30 gefördert. Dort wird von der Kommissionierperson das Fördergut 4 aus den einzelnen, gegebenenfalls das Fördergut 4 aufnehmende Behälter entnommen und dem jeweiligen Kommissionierbehälter übergeben.

Ist dieser Kommissionierauftrag durchgeführt, werden die nicht mehr benötigten Transportbehälter mit dem Fördergut 4 über die Zufördertechnik 12 wieder dem Hubbalkengerät 5 zugefördert. Das Hubbalkengerät 5 verbringt dann die Transportbehälter bzw. die Fördergüter 4 auf die jeweils verbleibenden bzw. freien Abstellplätzen 11 und lagert diese wiederum in den Regalen 2, 3 ein.

Während die Kommissionierperson diesen Kommissionierauftrag abarbeitet, kann über das Hubbalkengerät 5 ein neuer Kommissionierauftrag mit unterschiedlichen Fördergütern 4 wieder in einem der Regalfächer 10 in der entsprechenden Reihenfolge zusammengestellt werden. Sobald ein Kommissionierauftrag abgearbeitet ist, können die weiteren Fördergüter 4 wiederum der Kommissionierfördertechnik 30 über das Hubbalkengerät 5 zugefördert werden.

Unabhängig davon bzw. zusätzlich dazu wäre es aber auch noch möglich, im Bereich der Kommissionierfördertechnik 30 nicht nur Artikel oder Waren zu entnehmen, sondern auch zusätzlich Waren bzw. Artikel in dafür vorgesehene Lagerbehältnisse einzulagern und anschließend dem Regal 2 ,3 zuzufördern.

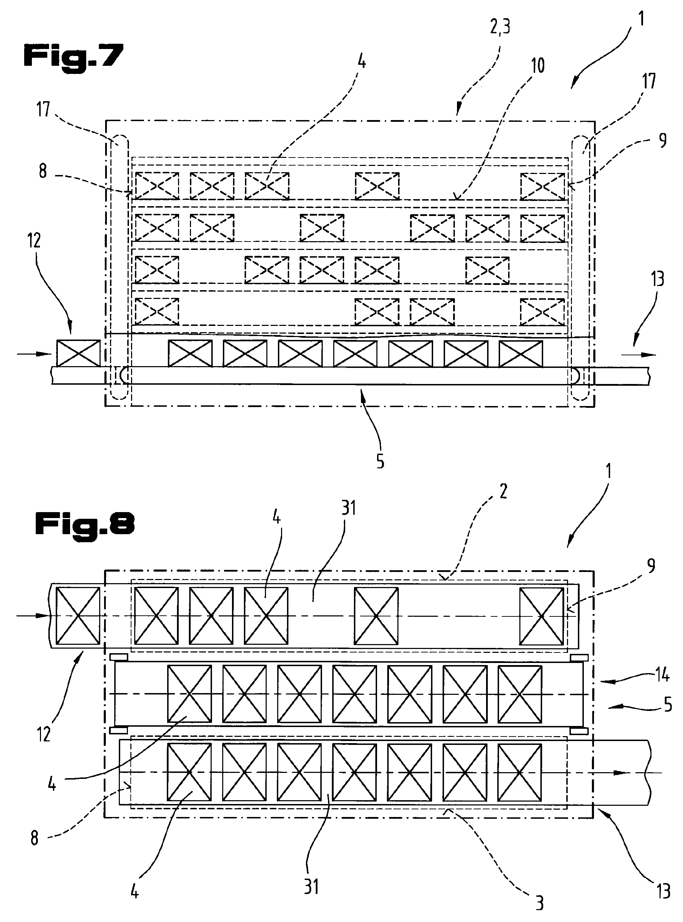

In den Fig. 7 und 8 ist eine weitere und gegebenenfalls für sich eigenständige Ausführungsform eines Lagersystems 1 gezeigt, wobei wiederum gleiche Teile, gleiche Bezugszeichen bzw. Bauteilbezeichnungen wie in den vorangegangenen Fig. 1 bis 6 verwendet werden. Um unnötige Wiederholungen zu verhindern wird auf die detaillierte Beschreibung in den vorangegangenen Fig. 1 bis 6 hingewiesen bzw. Bezug genommen.

Auch dieses hier gezeigte Lagersystem 1 umfasst wiederum die beiden Regale 2, 3 sowie das zwischen diesen angeordnete Hubbalkengerät 5. Weiters ist hier noch dargestellt, dass das Lagersystem 1 auch noch eine Zufördertechnik 12 als auch eine Abfördertechnik 13 umfasst. Im Gegensatz zu den zuvor beschriebenen Ausführungsbeispielen sind hier die Zu- sowie Abfördertechniken 12, 13 nicht in Verlängerung des Hubbalkengeräts 5 in X-Richtung gesehen, angeordnet, sondern jeweils in Verlängerung der beiden Regale 2, 3. So ist die Zufördertechnik 12 in der Verlängerung an das erste Regal 2 und die zweite Abfördertechnik 13 in der Verlängerung an das zweite Regal 3 vorgesehen. Weiters sind sowohl die Zu- als auch die Abfördertechnik 12, 13 mit ihrer Förderebene in etwa auf Höhe eines Regalfaches 10 angeordnet. Im vorliegenden Ausführungsbeispiel befinden sich sowohl die Zu- als auch die Abfördertechnik 12, 13 im Bereich des untersten Regalfaches 10.

Dadurch wird es möglich, Fördergüter 4 ausgehend von der stirnseitig angeordneten Zufördertechnik 12 hinein in das erste Regal 2 zu fördern. Dies kann beispielsweise dadurch erfolgen, dass sich die Zufördertechnik 12 ausgehend von der hier links angeordneten ersten Stirnseite 8 des Regals 2 bis hin zur weiteren Stirnseite 9 in X-Richtung erstreckt. Unabhängig davon wäre es aber auch noch möglich, dass im unmittelbaren Anschluss an die Fördertechnik 12 im Bereich der ersten Stirnseite 8 das unmittelbar daran anschließende Regalfach 10 mit einer eigenen Fördertechnik ausgerüstet ist, um so eine Entkopplung zwischen der Zufördertechnik 12 und der Fördertechnik im Regal 2 im Bereich des Regalfaches 10 zu ermöglichen. Dabei kann dann beispielsweise im Bereich des Regals 2 von einer weiteren Fördertechnik 31 bzw. einer eigenen Regalfachfördertechnik gesprochen werden. Mit dieser kann das Fördergut 4 im jeweiligen Regalfach 10 des Regals 2, 3 in einer parallel zur X-Richtung verlaufenden Förderrichtung gefördert werden.

Die Abfördertechnik 13, welche in stirnseitiger Verlängerung des weiteren Regals 3 im Bereich der weiteren Stirnseite 9 angeordnet ist, kann sich ebenfalls hinein in das Regal 3 erstrecken, um direkt ausgehend vom Hubbalkengerät 5 mit vorbereiteten Fördergütern 4 beschickt zu werden.

Bei diesem hier gezeigten Ausführungsbeispiel ist die Zu- und Abfördertechnik 12, 13 im Bereich des hier untersten Regalfaches 10 vorgesehen, wobei es aber auch möglich ist, zumindest einem der Regale 2, 3 mehrere in Y-Richtung übereinander angeordnete Zufördertechniken 12 und/oder Abfördertechniken 13 zuzuordnen. Gleichfalls wäre es aber auch möglich, anstatt der hier untersten Anordnung der Zu- und Abfördertechniken 12, 13 diese von der Aufstandsfläche 7 in Y-Richtung distanziert anzuordnen. Dies könnte beispielsweise in halber Höhe des Regals 2, 3 erfolgen. Bei höheren Regalen 2, 3 kann eine entsprechende Aufteilung der Zu- und Abfördertechniken 12, 13 erfolgen, um so die Förderwege des Hubbalkengeräts 5 innerhalb des Lagersystems 1 möglichst gering halten zu können.

Bei diesem hier dargestellten Lagersystem 1 werden die Fördergüter 4 ausgehend von der Fördertechnik 12 in den Bereich des ersten Regals 2 verbracht. Dabei könnten die im Bereich des Regals 2 angeordneten Fördervorrichtungen, beispielsweise jenen Fördervorrichtungen entsprechen, wie diese zuvor für die erste Fördervorrichtung 14 mit den ersten Fördereinheiten 18 für das Hubbalkengerät 5 beschrieben worden ist. Damit kann wiederum jedes Fördergut 4 in eine entsprechende Übernahmeposition verbracht werden, sodass dieses dann anschließend von der zweiten Fördervorrichtung 22 mit den zweiten Fördereinheiten 23 hin auf das Hubbalkengerät 5 übernommen werden kann. Die so übernommenen Fördergüter 4 werden dann an den dafür vorgesehenen Abstellplätzen 11 der Regale 2, 3 eingelagert. Für einen durchzuführenden Kommissionierauftrag werden dann mit dem Hubbalkengerät 5 aus den unterschiedlichen Regalfächern 10 die benötigten Fördergüter 4 entnommen und gegebenenfalls in entsprechender Reihenfolge in X-Richtung nebeneinander in ein dafür vorgesehenes Regalfach 10 eingelagert. Dabei können mehrere Entnahme- und Umlagervorgänge durchgeführt werden. Ist die entsprechende Anzahl an Fördergütern 4 vorbereitet, können diese Fördergüter 4 auf einmal vom Hubbalkengerät 5 übernommen und hin zur Abfördertechnik 13 verbracht werden. Ist diese Übergabeposition erreicht, werden die entsprechenden Fördergüter 4 vom Hubbalkengerät 5 mittels der zweiten Fördereinheiten 23 hin zur Abfördertechnik 13 im Bereich des weiteren Regals 3 verbracht. Anschließend daran werden die so vorbereiteten Fördergüter 4 aus dem Bereich des Regals 3 gefördert, wodurch ein erneuter Freiraum für die Abarbeitung eines weiteren Kommissionierauftrages geschaffen wird.

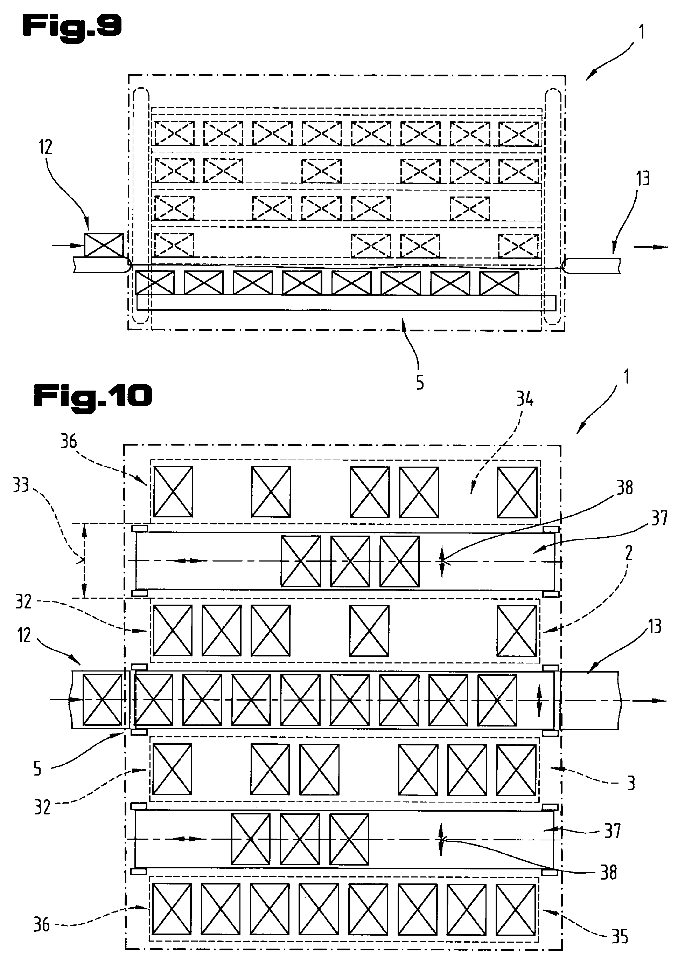

In den Fig. 9 und 10 ist eine weitere und gegebenenfalls für sich eigenständige Ausführungsform eines Lagersystems 1 gezeigt, wobei wiederum für gleiche Teile gleiche Bezugszeichen bzw. Bauteilbezeichnungen, wie in den vorangegangenen Fig. 1 bis 8 verwendet werden. Um unnötig Wiederholungen zu vermeiden wird wieder auf die detaillierte Beschreibung in den vorangegangenen Fig. 1 bis 8 hingewiesen bzw. Bezug genommen.

Auch dieses hier dargestellte Lagersystem 1 umfasst wiederum das Hubbalkengerät 5 mit den stirnseitig in Verlängerung daran anschließenden Zu- und Abfördertechniken 12, 13.

Beidseits des Hubbalkengeräts 5 sind wiederum die beiden Regale 2, 3 mit mehreren übereinander angeordneten Regalfächern 10 und den für die Fördergüter 4 vorgesehenen Abstellplätzen 11 angeordnet. Dabei wäre es aber auch möglich, in Z-Richtung gesehen, neben dem Hubbalkengerät 5 nur eines der Regale 2 oder 3 anzuordnen, wobei dieses oder diese Regale 2, 3 eine Lagerzone 32 bilden.

Weiters ist hier vorgesehen, dass auf zumindest einer, auf der vom Hubbalkengerät 5 abgewendeten Seite des die Lagerzone 32 bildenden Regals 2, 3 mit Distanz 33 ein weiteres Regal 34, 35 angeordnet ist, welches oder welche eine Pufferzone 36 bilden. Darüber hinaus ist zwischen dem oder den Regalen 2, 3 der Lagerzone 32 und dem Regal 34, 35 der Pufferzone 36 eine (automatisiert betriebene) Umlagervorrichtung 37 vorgesehen.

Bei diesem hier gezeigten Ausführungsbeispiel ist eine symmetrische Anordnung der Regale 2, 3 sowie 34, 35 bezüglich des mittig dazu angeordneten Hubbalkengeräts 5 vorgesehen. Damit sind beidseits des mittig angeordneten Hubbalkengeräts 5 in Z-Richtung gesehen, jeweils zwei Regale 2, 34; 3, 35 angeordnet. Unabhängig davon wäre es aber auch möglich, nur in einer Richtung neben dem Hubbalkengerät 5 die Regale 2, 34 oder 3, 35 vorzusehen. Bevorzugt wird jedoch die Lagerzone 32 durch in Z-Richtung beidseits neben dem Hubbalkengerät 5 angeordnete Regale 2, 3 gebildet. Mit dieser Mehrfachanordnung der beiden die Lagerzone 32 bildenden Regale 2, 3 sowie die die Pufferzone 36 bildenden Regale 34, 35 kann eine noch höhere Dynamik des Lagersystems 1 erzielt werden. Damit kann nicht nur die Lagerkapazität sondern auch die Einlagerungs- und Umlagerungsgeschwindigkeit für die einzelnen Fördergüter 4 innerhalb des Lagersystems 1 wesentlich erhöht werden.

Die Umlagervorrichtung 37, welche zwischen der Lagerzone 32 und der Pufferzone 36 angeordnet ist, kann durch unterschiedlichste Fördertechniken gebildet sein. So kann diese beispielsweise aus der Gruppe von Einebenen-Regalbediengerät, Mehrebenen-Regalbediengerät und Hubbalkengerät ausgewählt werden. Weiters ist auch noch die Umlagervorrichtung 37 mit einer in Z-Richtung beidseitig teleskopierbaren Ein- und Auslagerungseinheit 38 zu versehen. Diese ist vereinfacht durch einen Doppelpfeil angedeutet und kann beispielsweise analog ausgebildet sein, wie dies für die zweite Fördervorrichtung 22 mit deren Fördereinheiten 23 des Hubbalkengeräts 5 beschrieben worden ist.

Die Beschickung bzw. Befüllung des Lagersystems 1 erfolgt ausgehend von der Zufördertechnik 12 hin zum hier zentral angeordneten Hubbalkengerät 5. Dieses verteilt die Fördergüter 4 in die beiden unmittelbar neben dem Hubbalkengerät 5 angeordneten und die Lagerzone 32 bildenden Regale 2, 3 in Abhängigkeit von den dort freien Abstellplätzen 11 sowie der hinterlegten Speicher- und Umlagerlogik. In der Lagertechnik werden die Fördergüter 4 bzw. die Artikel in unterschiedliche Kategorien je nach deren Umschlaghäufigkeit innerhalb des Lagersystems 1 eingeteilt. Diese Einteilung in die einzelnen Kategorien unterscheidet A-Artikel, B-Artikel und C-Artikel. Jene Artikel, welche eine hohe Umschlaghäufigkeit besitzen, werden dabei als A-Artikel oder auch als Schnelldreher bzw. Schnellläufer bezeichnet. Jene Artikel, welche eine mittlere Umschlaghäufigkeit besitzen, werden als B-Artikel oder auch als Mitteldreher bzw. Mittelläufer bezeichnet. Schließlich werden jene Artikel, welche eine geringe Umschlaghäufigkeit besitzen, als C-Artikel oder auch als Langsamdreher bzw. Langsamläufer bezeichnet. Dabei wird die Umschlaghäufigkeit der C-Artikel im Verhältnis zu den A-Artikeln betrachtet und liegt auch unterhalb der Umschlaghäufigkeit der B-Artikel.

Bei diesem hier dargestellten Lagersystem 1 werden bevorzugt die A-Artikel und auch zumindest der überwiegende Teil der B-Artikel in dem oder den beiden unmittelbar neben dem Hubbalkengerät 5 angeordneten Regalen 2, 3, die die Lagerzone 32 bilden, eingelagert. Die C-Artikel werden in dem oder den randseitig des Lagersystems 1 angeordneten Regalen 34, 35 der Pufferzone 36 eingelagert. Bei der Umlagerung bzw. Umreihung von Fördergütern 4 kann es aber durchaus auch vorkommen, falls die Aufnahmekapazität der Regale 2, 3 nicht mehr ausreichend ist, auch A-Artikel und/oder B-Artikel kurzzeitig in einem der Regale 34, 35 zwischen zu speichern. Daher kann die Lagerzone 32 bzw. das/die Regal(e) 34, 35 auch zur temporären Lagerung der A-Artikel und/oder B-Artikel verwendet werden, und nicht bloß der C-Artikel.

Um für die Bereitstellung und neuerliche Einlagerung von Fördergütern 4 entsprechenden Freiraum zu schaffen, werden gerade nicht benötigte Fördergüter 4 von den Regalen 2, 3 der Lagerzone 32 mittels der Umlagervorrichtung 37 entnommen und hin zu den Regalen 34, 35 der Pufferzone 36 verbracht. Auf diese Weise kann wiederum in zumindest einem der unmittelbar neben dem Hubbalkengerät 5 angeordneten Regale 2, 3 ein oder mehrere Regalfächer 10 für die Vorbereitung eines Kommissionierauftrages freigegeben werden. Je nach dem Lagerort der Fördergüter 4 erfolgt eine entsprechende Umlagerung ausgehend von den hier randseitig angeordneten Regalen 34, 35 der Pufferzone 36 hin zu den die Lagerzone 32 bildenden Regale 2, 3. Von dort werden die Fördergüter 4 in das für die Bereitstellung vorbereitete Regalfach 10 mittels des Hubbalkengeräts 5 eingelagert. Dies kann entweder in einem der beiden Regale 2, 3 oder aber auch in beiden Regalen 2, 3 an den entsprechenden Positionen erfolgen. Befindet sich auf dem Hubbalkengerät 5 kein Fördergut 4, kann entweder aus einem einzigen Regalfach 10 die entsprechende Anzahl und bevorzugt in Reihe nebeneinander angeordneten Fördergüter 4 hin auf das Hubbalkengerät 5 übernommen und der Abfördertechnik 13 zugeführt werden.

Sind die Fördergüter 4 beispielweise jeweils in einem dem Hubbalkengerät 5 gegenüberliegenden Regalfach 10 in der gleichen Regalebene, jedoch in X-Richtung zueinander versetzt angeordnet, kann eine gleichzeitige Entnahme aus beiden Regalfächern 10 der Regale 2, 3 erfolgen. So kann in einem einzigen Übernahmevorgang die entsprechende Reihe bzw. Gruppe an Fördergütern 4 auf das Hubbalkengerät 5 durchgeführt werden. Dies erfolgt mittels der beidseitig teleskopierbaren Ein- und Auslagervorrichtungen 24.

Dabei kann jeder der zuvor beschriebenen Bereitstellungsvorgänge am Hubbalkengerät 5 als maximale Anzahl an Fördergütern 4 jene Anzahl umfassen, welche auch an Abstellplätzen 11 in X-Richtung an einem der Regalfächern 10 vorgesehen ist. So wird es möglich, nicht nur eine rasche Einlagerung der Fördergüter 4 im Lagersystem 1 und den dafür vorgesehen Regal 2, 3, 34, 35 zu erzielen, sondern dass auch ggf. unter Zwischenschaltung eines Umlagervorganges eine erneute Bereitstellung in der entsprechenden Reihenfolge durchgeführt werden kann.

Zusätzlich wäre es aber auch noch möglich, bei jedem der zuvor beschriebenen Lagersysteme 1 mehrere Zufördertechniken 12 und/oder Abfördertechniken 13 an den dafür vorgesehen Stirnseiten 8, 9 anzuordnen bzw. auszubilden. Damit kann die Umschlagsgeschwindigkeit der Fördergüter 4 beginnend mit der Einlagerung derselben im Lagersystem 1 und der nachfolgenden Entnahme bis hin zur Bereitstellung für einen Kommissionierauftrag erfolgen.

Weiters sei abschließend noch bemerkt, dass allgemein von Fördergütern 4 gesprochen wird. Als Fördergut können auch die unterschiedlichsten Artikel bzw. Waren bezeichnet werden, welche in den bzw. auf den dafür vorgesehenen Transportbehältern, Kisten, Paletten usw. bevorratet sind und diese gemeinsam das Transport- bzw. Fördergut 4 darstellen.

Nach einer anderen nicht gezeigten Ausführung kann das Regal 2, 3 zum Lagern von Fördergütern 4 auch derart gestaltet werden, dass diese auf einer dem Hubbalkengerät 5 abgewandten Seite eine wandartige Tragkonstruktion und an dieser in vertikal übereinander liegenden Regalebenen parallele, vorkragende Auflagerelemente umfasst. Dabei können die Fördergüter 4 nebeneinander auf durch die Auflagerelemente gebildete Abstellplätze 11 gelagert werden. Ein Fördergut 4 wird beispielsweise auf zumindest zwei benachbarten Auflagerelementen gelagert. Möglich ist auch eine Ausführung, bei der auf den Auflagerelementen je Regalebene ein Fachboden angeordnet ist, welcher sich im Wesentlichen durchgehend zwischen den Stirnseiten 8, 9 der Regale 2, 3 erstreckt und die Abstellplätze 11 ausbildet. Diese Ausführungen der Regale 2, 3 sind einfach und kostengünstig zu realisieren und haben zudem den Vorteil, dass die Stellplätze 11 für die Ein- und Auslagervorrichtung 24 von vorne in Z-Richtung gut zugänglich sind.

Ebenso oder alternativ können auch die Regale 34, 35 der Pufferzone 36 derart gestaltet werden.

Sind mehrere zweite Fördereinheiten 23 bzw. Ein- und Auslagervorrichtungen 24 in X-Richtung auf dem Tragelement 15 angeordnet und sind die Stellantriebe für die Ein- und Auslagervorrichtung 24 je Fördereinheit 23 oder Stellantriebe für die Mitnahmeelemente 25 unabhängig voneinander ansteuerbar, so können Fördergüter 4 unterschiedlicher Formatabmessungen, daher Länge und Breite, zwischen dem Regal 2, 3 und der ersten Fördereinheit 18 manipuliert werden. Kleine Fördergüter 4, beispielsweise mit den Formatabmessungen 400 mm x 600 mm, werden jeweils über die Mitnahmeelemente 25 einer Ein- und Auslagervorrichtung 24 zwischen dem Regal 2, 3 und der ersten Fördereinheit 18 manipuliert. Dabei können die Fördergüter 4 in entgegengesetzter Z-Richtung manipuliert werden. Große Fördergüter 4, beispielsweise mit den Formatabmessungen 800 mm x 600 mm, werden über die Mitnahmeelemente 25 beispielsweise von zumindest zwei Ein- und Auslagervorrichtungen 24 zwischen dem Regal 2, 3 und der ersten Fördereinheit 18 manipuliert. Dabei müssen die Stellantriebe für die Ein- und Auslagervorrichtungen 24 synchron angesteuert werden, sodass diese gemeinsam in dieselbe Z-Richtung verstellt werden und dabei das Fördergut 4 entweder in das/aus dem Regal 2 oder Regal 3 ein-/ausgelagert wird. Sollen noch größere Fördergüter 4, beispielsweise mit den Formatabmessungen 1600 mm x 600 mm oder 3200 x 600 mm, manipuliert werden, so werden dementsprechend drei, vier und so weiter die Stellantriebe für die Ein- und Auslagervorrichtungen 24 synchron angesteuert.

Sind mehrere zweite Fördereinheiten 23 bzw. Ein- und Auslagervorrichtungen 24 in X-Richtung auf dem Tragelement 15 angeordnet und sind die Stellantriebe der Ein- und Auslagervorrichtungen 24 unabhängig voneinander ansteuerbar, so können gleichzeitig vom ersten Regal 2 zumindest ein oder mehrere Fördergüter 4 und vom zweiten Regal 3 zumindest ein oder mehrere Fördergüter 4 in ein Regalfach 10 eingelagert und/oder aus einem Regalfach ausgelagert werden.

Der Ordnung halber sei abschließend darauf hingewiesen, dass zum besseren Verständnis des Aufbaus des Lagersystems 1 dieses bzw. dessen Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

### Bezugszeichenaufstellung

| | | | |
|---|---|---|---|
| 1 | Lagersystem | 31 | Fördertechnik |
| 2 | Regal | 32 | Lagerzone |
| 3 | Regal | 33 | Distanz |
| 4 | Fördergut | 34 | Regal |
| 5 | Hubbalkengerät | 35 | Regal |
| | | | |
| 6 | Regalgasse | 36 | Pufferzone |
| 7 | Aufstandsfläche | 37 | Umlagervorrichtung |
| 8 | Stirnseite | 38 | Ein- und Auslagerungseinheit |
| 9 | Stirnseite | | |
| 10 | Regalfach | | |
| | | | |
| 11 | Abstellplatz | | |
| 12 | Zufördertechnik | | |
| 13 | Abfördertechnik | | |
| 14 | erste Fördervorrichtung | | |
| 15 | Tragelement | | |
| | | | |
| 16 | Länge | | |
| 17 | Verstellvorrichtung | | |
| 18 | erste Fördereinheit | | |
| 19 | Abstand | | |
| 20 | erstes Förderelement | | |
| | | | |
| 21 | Transportebene | | |
| 22 | zweite Fördervorrichtung | | |
| 23 | zweite Fördereinheit | | |
| 24 | Ein- und Auslagervorrichtung | | |
| 25 | Mitnahmeelement | | |
| | | | |
| 26 | Stellarm | | |
| 27 | Aufnahmeraum | | |
| 28 | Entnahmefach | | |
| 29 | Kontrollvorrichtung | | |
| 30 | Kommissionierfördertechnik | | |

## Patentansprüche

1. Lagersystem (1) mit zumindest einem ersten Regal (2, 3) mit übereinander angeordneten Regalfächern (10) mit Abstellplätzen (11) für Fördergüter (4), und mit einem an einer Längsseite des ersten Regals (2, 3) angeordneten Hubbalkengerät (5), wobei das erste Regal (2, 3) eine Lagerzone (32) bildet und in X-Richtung beidseitig durch Stirnseiten (8, 9) begrenzt ist, und wobei das
Hubbalkengerät (5) ein Tragelement (15), das sich in etwa über die Längserstreckung des ersten Regals (2, 3) zwischen seinen beiden Stirnseiten (8, 9) erstreckt und dabei eine Länge (16) definiert, eine Verstellvorrichtung (17) für das Tragelement (15), um dieses in vertikaler Y-Richtung zwischen den einzelnen Regalfächern (10) verfahren zu können, eine am Tragelement (15) angeordnete erste Fördervorrichtung (14) mit zumindest einer in X-Richtung das Fördergut (4) fördernden ersten Fördereinheit (18), eine am Tragelement (15) angeordnete zweite Fördervorrichtung (22) mit zumindest einer zweiten Fördereinheit (23), mit welcher das Fördergut (4) in Z-Richtung zwischen der ersten Fördereinheit (18) und dem Abstellplatz (11) am Regalfach (10) verlagerbar ist, umfasst,
**dadurch gekennzeichnet, dass**
das Lagersystem (1) zusätzlich zur Lagerzone (32) zumindest ein zweites Regal (34, 35) aufweist, welches auf einer vom Hubbalkengerät (5) abgewendeten Seite mit Distanz (33) zum ersten Regal (2, 3) angeordnet ist und eine Pufferzone (36) zur Lagerung von Fördergütern (4) bildet, wobei zwischen dem ersten Regal (2, 3) der Lagerzone (32) und dem zweiten Regal (34, 35) der Pufferzone (36) eine Umlagervorrichtung (37) vorgesehen ist, mittels welcher Fördergüter (4) zwischen der Lagerzone (32) und Pufferzone (36) umlagerbar sind.

2. Lagersystem (1) nach Anspruch 1, **dadurch gekennzeichnet, dass** die Lagerzone (32) beidseits des Hubbalkengeräts (5) in Z-Richtung jeweils ein erstes Regal (2, 3) mit übereinander angeordneten Regalfächern (10) umfasst.

3. Lagersystem (1) nach Anspruch 1 oder 2, **dadurch gekennzeichnet, dass** eine Zu- und Abfördertechnik (12, 13) an beiden Stirnseiten (8, 9) des ersten Regals (2, 3) angeordnet sind, wobei sich die Zu- und Abfördertechniken (12, 13) jeweils in der Verlängerung des ersten Regals (2, 3) oder jeweils in der Verlängerung des Hubbalkengeräts (5) erstrecken.

4. Lagersystem (1) nach Anspruch 3, **dadurch gekennzeichnet, dass** die Zu- und Abfördertechnik (12, 13) durch eine Kommissionierfördertechnik (30) in Förderverbindung stehen.

5. Lagersystem (1) nach Anspruch 1, **dadurch gekennzeichnet, dass** die Pufferzone (36) in Z-Richtung beidseits der ersten Regale (2, 3) jeweils eine Umlagervorrichtung (37) und ein zweites Regal (34, 35) umfasst.

6. Lagersystem (1) nach Anspruch 1 oder 5, **dadurch gekennzeichnet, dass** die Umlagervorrichtung (37) mit zumindest einer in Z-Richtung beidseitig teleskopierbaren Ein- und Auslagerungseinheit (38) versehen ist.

7. Lagersystem (1) nach einem der Ansprüche 1 bis 3, **dadurch gekennzeichnet, dass** die Zu- und Abfördertechniken (12, 13) an Stirnseiten (8, 9) des ersten Regals (2, 3) vorgesehen sind, wobei sich die Zufördertechnik (12) in der Verlängerung an eines der ersten Regale (2) und sich die Abfördertechnik (13) in der Verlängerung an das andere der ersten Regale (3) erstrecken und jeweils auf Höhe eines Regalfaches (10) angeordnet sind.

8. Lagersystem (1) nach einem der Ansprüche 1 bis 7, **dadurch gekennzeichnet, dass** zumindest einem der ersten Regale (2, 3) mehrere in Y-Richtung übereinander angeordnete Zufördertechniken (12) und/oder Abfördertechniken (13) zugeordnet sind.

9. Lagersystem (1) nach Anspruch 1 oder 8, **dadurch gekennzeichnet, dass** das sich in der Verlängerung der Zu- und Abfördertechniken (12, 13) jeweils erstreckende Regalfach (10) der ersten Regale (2, 3) mit einer parallel zur X-Richtung das Fördergut (4) fördernden Fördertechnik (31) ausgerüstet ist.

10. Lagersystem (1) nach Anspruch 1, **dadurch gekennzeichnet, dass** die erste Fördereinheit (18) jeweils mehrere in Längserstreckung des Tragelements (15) mit gegenseitigem Abstand (19) parallel angeordnete, als angetriebene Rollen ausgebildete erste Förderelemente (20) umfasst, welche eine Transportebene (21) für die Fördergüter (4) definieren und die zweite Fördereinheit (23) zumindest eine Ein- und Auslagervorrichtung (24) mit zumindest einem Mitnahmeelement (25) umfasst, bei der das Mitnahmeelement (25) von einer sich unterhalb der Transportebene (21) befindlichen Ruhestellung in eine sich oberhalb der Transportebene (21) befindliche Eingriffsstellung verstellbar ist.

11. Lagersystem (1) nach einem der Ansprüche 1 bis 10, **dadurch gekennzeichnet, dass** die Anzahl der ersten Fördereinheiten (18) mit deren ersten Förderelementen (20) derart gewählt ist, dass diese Anzahl der Anzahl der Abstellplätze (11) in einem Regalfach (10) in X-Richtung entspricht und die ersten Fördereinheiten (18) verteilt über die Länge (16) des Tragelements (15) angeordnet sind.

12. Lagersystem (1) nach einem der Ansprüche 1, 10 oder 11, **dadurch gekennzeichnet, dass** bevorzugt jedes der als angetriebene Rolle ausgebildete erste Förderelement (20) der ersten Fördereinheit (18) mit einem eigenen Antrieb in Wirkverbindung steht.

13. Lagersystem (1) nach Anspruch 1 oder 10, **dadurch gekennzeichnet, dass** die zweite Fördervorrichtung (22) eine Mehrzahl von am Tragelement (15) angeordnete und unabhängig voneinander ansteuerbare zweite Fördereinheiten (23) umfasst, wobei jede zweite Fördereinheit (23) zumindest eine Ein- und Auslagervorrichtung (24) ausbildet.

14. Lagersystem (1) nach einem der Ansprüche 1, 10 oder 13, **dadurch gekennzeichnet, dass** die Anzahl der zweiten Fördereinheiten (23) derart gewählt ist, dass diese der Anzahl der Abstellplätze (11) in einem Regalfach (10) in X-Richtung entspricht.

15. Lagersystem (1) nach einem der Ansprüche 1 bis 14, **dadurch gekennzeichnet, dass** jedem Abstellplatz (11) für das Fördergut (4) im ersten Regal (2, 3) in X-Richtung gesehen zumindest zwei Ein- und Auslagervorrichtungen (24) am Tragelement (15) zugeordnet sind.

16. Lagersystem (1) nach einem der Ansprüche 1 bis 13, **dadurch gekennzeichnet, dass** zwischen den mit gegenseitigem Abstand (19) voneinander angeordneten, als Rollen ausgebildeten ersten Förderelementen (20), ein Aufnahmeraum (27) ausgebildet ist und die Ein- und Auslagervorrichtung (24) in dem Aufnahmeraum (27) zwischen den Rollen angeordnet ist.

## Claims

1. A storage system (1) with at least a first rack (2,3) with rack bays (10) arranged over one another with storage positions (11) for conveyed goods (4), and with a lifting bar conveyor (5) arranged on a longitudinal side of the first rack (2, 3), wherein the first rack (2, 3) forms a storage zone (32) and is delimited in X-direction on both sides by end faces (8, 9), and wherein the
lifting bar conveyor (5) comprises a carrying element (15), which extends approximately over the longitudinal extent of the first rack (2, 3) between its two end faces (8, 9) and in so doing defines a length (16), an adjusting device (17) for the carrying element (15), in order to be able to move the latter in vertical Y-direction between the individual rack bays (10), a first conveying device (14), arranged on the carrying element (15), with at least a first conveying unit (18) conveying the conveyed goods (4) in X-direction, a second conveying device (22) arranged on the carrying element (15) with at least a second conveying unit (23), by which the conveyed goods (4) is able to be displaced in Z-direction between the first conveying unit (18) and the storage position (11) on the rack bay (10),
**characterized in that**
the storage system (1) in addition to the storage zone (32) has at least a second rack (34, 35), which is arranged on a side, facing away from the lifting bar conveyor (5), with a distance (33) from the first rack (2, 3) and forms a buffer zone (36) for the storage of conveyed goods (4), wherein between the first rack (2, 3) of the storage zone (32) and the second rack (34, 35) of the buffer zone (36) a transfer device (37) is provided, by means of which conveyed goods (4) are able to be transferred between the storage zone (32) and buffer zone (36).

2. The storage system (1) according to claim 1, **characterized in that** the storage zone (32) on both sides of the lifting bar conveyor (5) comprises in Z-direction respectively a first rack (2, 3) with rack bays (10) arranged over one another.

3. The storage system (1) according to claim 1 or 2, **characterized in that** a storage- and removal conveying system (12, 13) are arranged on both end faces (8, 9) of the first rack (2, 3), wherein the storage- and removal conveying systems (12, 13) extend respectively in the extension of the first rack (2, 3) or respectively in the extension of the lifting bar conveyor (5).

4. The storage system (1) according to claim 3, **characterized in that** the storage- and removal conveying systems (12, 13) are in conveying connection through a picking conveying system (30).

5. The storage system (1) according to claim 1, **characterized in that** the buffer zone (36) comprises in Z-direction on both sides of the first racks (2, 3) respectively a transfer device (37) and a second rack (34, 35).

6. The storage system (1) according to claim 1 or 5, **characterized in that** the transfer device (37) is provided with at least one storage- and removal unit (38) which is able to be telescoped on both sides in Z-direction.

7. The storage system (1) according to one of claims 1 to 3, **characterized in that** the storage- and removal conveying systems (12, 13) are provided on end faces (8, 9) of the first rack (2, 3), wherein the storage conveying system (12) extends in the extension to one of the first racks (2) and the removal conveying system (13) extends in the extension to the other of the first racks (3) and are respectively arranged at the level of a rack bay (10).

8. The storage system (1) according to one of claims 1 to 7, **characterized in that** there are associated with at least one of the first racks (2, 3) several storage conveying systems (12) and/or removal conveying systems (13) arranged over one another in Y-direction.

9. The storage system (1) according to claim 1 or 8, **characterized in that** the rack bay (10) of the first racks (2, 3), extending respectively in the extension of the storage- and removal conveying systems (12, 13), is equipped with a conveying system (31) conveying the conveyed goods (4) parallel to the X-direction.

10. The storage system (1) according to claim 1, **characterized in that** the first conveying unit (18) comprises respectively several first conveying elements (20), arranged in a parallel manner in longitudinal extent of the carrying element (15) with reciprocal distance (19), constructed as driven rollers, which first conveying elements define a transport plane (21) for the conveyed goods (4), and the second conveying unit (23) comprises at least one storage- and removal device (24) with at least one driving element (25), in which the driving element (25) is able to be moved from a position of rest situated beneath the transport plane (21) into an engagement position situated above the transport plane (21).

11. The storage system (1) according to one of claims 1 to 10, **characterized in that** the number of the first conveying units (18) with the first conveying elements (20) thereof is selected such that this number corresponds to the number of storage positions (11) in a rack bay (10) in X-direction and the first conveying units (18) are distributed over the length (16) of the carrying element (15).

12. The storage system (1) according to one of claims 1, 10 or 11, **characterized in that** preferably each of the first conveying element (20) of the first conveying unit (18), constructed as a driven roller and is in operative connection with its own drive.

13. The storage system (1) according to claim 1 or 10, **characterized in that** the second conveying device (22) comprises a plurality of second conveying units (23) arranged on the carrying element (15) and able to be activated independently of one another, wherein every other conveying unit (23) forms at least one storage- and removal device (24).

14. The storage system (1) according to one of claims 1, 10 or 13, **characterized in that** the number of the second conveying units (23) is selected such that this corresponds to the number of storage positions (11) in a rack bay (10) in X-direction.

15. The storage system (1) according to one of claims 1 to 14, **characterized in that** there are associated with each storage position (11) for the conveyed goods (4) in the first rack (2, 3) viewed in X-direction at least two storage- and removal devices (24) on the carrying element (15).

16. The storage system (1) according to one of claims 1 to 13, **characterized in that** between the first conveying elements (20), arranged with a reciprocal distance (19) from one another, constructed as rollers, a receiving space (27) is formed, and the storage- and removal device (24) is arranged in the receiving space (27) between the rollers.

## Revendications

1. Système de stockage (1) avec au moins un premier rayonnage (2, 3) avec des compartiments de rayonnages (10) disposés les uns au-dessus des autres, avec des emplacements de rayonnages (11) pour des articles à transporter (4) et avec un appareil à poutre de levage (5) disposé le long d'un côté longitudinal du premier rayonnage (2, 3), le premier rayonnage (2, 3) formant une zone de stockage (32) et est limité dans la direction X des deux côtés par des côtés frontaux (8, 9) et
l'appareil à poutre de levage (5) comprend un élément porteur (15), qui s'étend approximativement sur toute l'extension longitudinale du premier rayonnage (2, 3) entre ses deux côtés frontaux (8, 9) et définit une longueur (16), un dispositif de déplacement (17) pour l'élément porteur (15), afin de pouvoir déplacer celui-ci dans la direction Y verticale entre les différents compartiments de rayonnages (10), un premier dispositif de convoyage (14) disposé sur l'élément porteur (15), avec au moins une première unité de convoyage (18) convoyant l'article à transporter (4) dans la direction X, un deuxième dispositif de convoyage (22) disposé sur l'élément porteur (15), avec au moins une deuxième unité de convoyage (23), avec laquelle l'article à transporter (4) peut être déplacé dans la direction Z entre la première unité de convoyage (18) et l'emplacement de rangement (11) sur le compartiment de rayonnage (10),
**caractérisé en ce que**
le système de stockage (1) comprend, en plus de la zone de stockage (32), au moins un deuxième rayonnage (34, 35), qui est disposé, sur un côté opposé à l'appareil à poutre de levage (5), à une certaine distance (33) du premier rayonnage (2, 3) et forme une zone tampon (36) pour le stockage d'articles à transporter (4), un dispositif de transfert (37) étant prévu entre le premier rayonnage (2, 3) de la zone de stockage (32) et le deuxième rayonnage (34, 35) de la zone tampon (36), à l'aide de laquelle les articles à transporter (4) peuvent être transférés entre la zone de stockage (32) et la zone tampon (36).

2. Système de stockage (1) selon la revendication 1, **caractérisé en ce que** la zone de stockage (32) comprend, des deux côtés de l'appareil à poutre de levage (5) dans la direction Z, un premier rayonnage (2, 3) avec des compartiments de rayonnages (10) disposés les uns sur les autres.

3. Système de stockage (1) selon la revendication 1 ou 2, **caractérisé en ce qu'**un système d'alimentation et un système d'évacuation (12, 13) sont disposés sur les deux côtés frontaux (8, 9) du premier rayonnage (2, 3), les systèmes d'alimentation et d'évacuation (12, 13) s'étendant chacun dans le prolongement du premier rayonnage (2, 3) ou dans le prolongement de l'appareil à poutre de levage (5).

4. Système de stockage (1) selon la revendication 3, **caractérisé en ce que** les systèmes d'alimentation et d'évacuation (12, 13) sont en liaison de convoyage par l'intermédiaire d'un système de convoyage pour préparation de commande (30).

5. Système de stockage (1) selon la revendication 1, **caractérisé en ce que** la zone tampon (36) comprend, dans la direction Z, entre les premiers rayonnages (2, 3), un dispositif de transfert (37) et un deuxième rayonnage (34, 35).

6. Système de stockage (1) selon la revendication 1 ou 5, **caractérisé en ce que** le dispositif de transfert (37) est muni d'au moins une unité de stockage et de déstockage (38) télescopique des deux côtés dans la direction Z.

7. Système de stockage (1) selon l'une des revendications 1 à 3, **caractérisé en ce que** les systèmes d'alimentation et d'évacuation (12, 13) sont prévus sur des côtés frontaux (8, 9) du premier rayonnage (2, 3), le système d'alimentation (12) s'étendant dans le prolongement d'un des premiers rayonnages (2) et le système d'évacuation (13) s'étendant dans le prolongement de l'autre des premiers rayonnages (3) et étant disposés chacun à la hauteur d'un compartiment de rayonnage (10).

8. Système de stockage (1) selon l'une des revendications 1 à 7, **caractérisé en ce que**, à au moins un des premiers rayonnages (2, 3), correspondent plusieurs systèmes d'alimentation (12) et/ou systèmes d'évacuation (13) disposés les uns au-dessus des autres dans la direction Y.

9. Système de stockage (1) selon la revendication 1 ou 8, **caractérisé en ce que** le compartiment de rayonnage (10) des premiers rayonnages (2, 3), qui s'étend dans le prolongement des systèmes d'alimentation et d'évacuation (12, 13), est équipé d'un système de convoyage (31) transportant l'article à transporter (4) parallèlement à la direction X.

10. Système de stockage (1) selon la revendication 1, **caractérisé en ce que** la première unité de convoyage (18) comprend plusieurs premiers éléments de convoyage (20), conçus sous la forme de rouleaux entraînés, disposés parallèlement dans l'extension longitudinale de l'élément porteur (15) avec une distance (19) entre eux, qui définissent un plan de transport (21) pour les articles à transporter (4) et la deuxième unité de convoyage (23) comprend au moins un dispositif de stockage et de déstockage (24), avec au moins un élément d'entraînement (25), dans lequel l'élément d'entraînement (25) peut être déplacé d'une position de repos se trouvant en dessous du plan de transport (21) vers une position d'emboîtement se trouvant au-dessus du plan de transport (21).

11. Système de stockage (1) selon l'une des revendications 1 à 10, **caractérisé en ce que** le nombre des premières unités de convoyage (18) avec les premiers éléments de convoyage (20) est choisi de façon à ce que ce nombre corresponde au nombre d'emplacements de rangement (11) dans un compartiment de rayonnage (10) dans la direction X et les premières unités de convoyage (18) sont réparties sur la longueur (16) de l'élément porteur (15).

12. Système de stockage (1) selon l'une des revendications 1, 10 ou 11, **caractérisé en ce que**, de préférence, chacun des premiers éléments de convoyage (20), conçus sous la forme de rouleaux entraînés, de la première unité de convoyage (18) est relié de manière fonctionnelle avec son propre dispositif d'entraînement.

13. Système de stockage (1) selon l'une des revendications 1 ou 10, **caractérisé en ce que** le deuxième dispositif de convoyage (22) comprend une pluralité de deuxièmes unités de convoyage (23) disposées sur l'élément porteur (15) et contrôlables indépendamment les unes des autres, chacune des deuxièmes unités de convoyage (23) constituant au moins un système de stockage et de déstockage (24).

14. Système de stockage (1) selon l'une des revendications 1, 10 ou 13, **caractérisé en ce que** le nombre des deuxièmes unités de convoyage (23) est choisi de façon à ce que celui-ci correspond au nombre d'emplacements de rangement (11) dans un compartiment de rayonnage (10) dans la direction X.

15. Système de stockage (1) selon l'une des revendications 1 à 14, **caractérisé en ce que**, à chaque emplacement de rangement (11) pour l'article à transporter (4), dans le premier rayonnage (2, 3), vu dans la direction X, correspondent au moins deux dispositifs de stockage et de déstockage (24) sur l'élément porteur (15).

16. Système de stockage (1) selon l'une des revendications 1 à 13, **caractérisé en ce que**, entre les premiers éléments de convoyage (20) disposés à une distance (19) entre eux et conçus comme des rouleaux, un espace de logement (27) est formé et le dispositif de stockage et de déstockage (24) est disposé dans l'espace de logement (27) entre les rouleaux.
